# EUROPEAN PATENT SPECIFICATION

(11) **EP 0 344 284 B1**
(45) Date of publication and mention of the grant of the patent: **08.02.1995**
(21) Application number: 89900735.5
(22) Date of filing: 22.11.1988
(51) Int. Cl.: C04B 35/18, C04B 38/10, C04B 41/53, C04B 41/91, B29C 67/20, B29C 67/24, B01D 39/20

(54) **POROUS CERAMIC SHAPES, COMPOSITIONS FOR THE PREPARATION THEREOF, AND METHOD FOR PRODUCING SAME**
PORÖSE KERAMISCHE FORMEN, ZUSAMMENSETZUNGEN ZUR HERSTELLUNG UND VERFAHREN ZUR HERSTELLUNG
FORMES DE CERAMIQUE POREUSE, COMPOSITIONS POUR LEUR PREPARATION ET PROCEDE DE PRODUCTION

(30) Priority: 02.12.1987 US 127639; 02.12.1987 US 127654; 02.12.1987 US 127784; 02.12.1987 US 127808; 02.12.1987 US 127942; 18.11.1988 US 273208
(43) Date of publication of application: 06.12.1989
(73) Proprietor: CERCONA, INC., Dayton Ohio 45404 (US)
(72) Inventor: HELFERICH, Richard, Lee, Clayton, OH 45315 (US); SCHENCK, Robert, C., Kettering, OH 45429 (US)
(74) Representative: Bankes, Stephen Charles Digby
(86) International application number: US8804221
(87) International publication number: WO8905285

(56) References cited:
- US-A- 1 880 157
- US-A- 3 537 816
- US-A- 4 071 369
- US-A- 4 432 798
- US-A- 4 436 538

## Description

The present invention relates to ceramic articles, and more particularly to porous ceramic shapes, made from compositions which can be cast into molds or injection molded or extruded in desired configuration, which shapes find utility for a wide variety of purposes, including filters, kiln furniture, molds, furnace linings, insulation, and other similar products such as lightweight building blocks.

It is known in the art to prepare porous ceramic articles for a number of uses. For example, ceramics possessing open-celled porosity can be employed as filters for removing impurities from molten metals or for removing particulates from gaseous streams or other like filtration uses, while ceramics of open- or closed-cell porosity can find use as insulation or for any other purpose where low density structures are advantageous.

While the structural and dimensional properties of ceramics theoretically lend themselves well to utilization as the materials from which filtering elements, molds, furnace linings, kiln furniture, building blocks and the like can be constructed, their practical use for these purposes has been limited by consideration of cost (i.e., difficulty in economic attainment of desired porosity) and lack of design flexibility (i.e., difficulty in producing desired, sometimes complex, shapes and various surface treatments or configurations).

US-A-4 432 798 describes the use of an aluminosilicate hydrogel binder formed from alkaline silicate and aluminate solutions in a mixture with different refractory aggregates, Al metal powder, gel modifiers and fillers such as clay or bentonite to produce self-setting foamed ceramic compositions utilized in the production of insulators, foamed constructions and bricks.

The present invention consists of a foamable ceramic composition which can be molded to a desired geometric configuration and which is self-settable in said configuration to achieve a self-supporting shaped structure of defined porosity, said composition comprising an aqueous admixture of effective amounts of an alkali metal silicate, an alkali metal aluminate, refractory ceramic materials and metal powder, whereby said alkali metal silicate and said alkali metal aluminate react to form a self-setting alkali metal aluminosilicate hydrogel which services as a binder to set the composition in the molded shape, and wherein said metal powder is present in an amount effective to react with alkaline materials in said composition so as to produce, as a by-product of such reaction, hydrogen gas which, in conjunction with said surfactant, develops in said composition a significant degree of porosity prior to the setting of said hydrogel, characterised in that the composition includes a surfactant and a viscosity-modifying and gel strengthening agent in the form of finely-divided spherical particles.

According to the present invention, there is also provided a process for preparing porous ceramic articles, comprising the steps of (a) providing a foamable ceramic composition comprised of an aqueous admixture of effective amounts of an alkali metal silicate, an alkali metal aluminate, refractory ceramic materials, viscosity-modifying and gel strengthening agent in the form of finely divided spherical particles, surfactant and metal powder; (b) forming said composition into a desired configuration utilizing a mold or extrusion chamber; (c) permitting said casting composition to reside in said mold or said chamber for a predetermined period of time during which components of said composition react to form an aluminosilicate hydrogel which binds all components of said composition in a supportable shape conforming to said mold or chamber and during which porosity is developed in said supportable shape by virtue of evolution of hydrogen in said composition as a result of reaction between said metal powder and alkaline materials in said composition; (d) removing said porous supportable shape from said mold or said chamber; and (e) drying said supportable shape.

The invention can thus provide a ceramic composition which is capable of being molded (e.g., cast, injection molded, extruded) into a desired configuration, and which develops stable porosity as a result of internal reactions and interactions between and among deliberately present elements of the composition. Among the significant advantages of the composition is the ability to manipulate its elements and/or the amounts thereof so as to controllably achieve a wide variety of characteristics in the final ceramic article. The composition is self-setting, again controllably, and in the set state is then further processable (e.g., by drying, sintering or firing) to produce a final ceramic article having a porous structure. Porous ceramic articles made from the compositions of the present invention can be arranged to have a predominantly open or a predominantly closed cell network depending upon desired end use. The open-cell configurations are especially useful for the production of filtering elements (such as elements for filtering particulate soot suspended in diesel exhaust gases), while both open and closed-cell configurations exhibit utility as insulation, furnace linings, kiln furniture, molds, building blocks and the like.

The composition of the present invention has the important characteristic of being moldable into any desired configuration, thereby greatly expanding the potential porous ceramic shapes which are achievable and which may be required for a wide variety of functional and/or aesthetic purposes. Generally, the composition will be poured or cast into a mold of desired configuration or injection-fed into an appropriate mold. However, it also is possible to directly extrude the composition into particular porous shapes or into gross porous shapes which can then be cut to a particular desired shape.

The aluminosilicate hydrogel and suitable particulate ceramic materials can be chosen depending upon the desired end use, e.g., for articles which will be subject to high temperature processes or thermal cycling, such as exhaust filters, kiln furniture or the like, particulate refractory ceramics such as refractory oxides, carbides, nitrides, borides, silicides and the like, such as alumina, chromia, zirconia, magnesia, titania, silica and mixtures thereof (either as admixtures per se or admixed as part of a compound itself, e.g., mullite, cordierite, calcined kyanite and the like), silicon carbide, silicon nitride, boron carbide, boron nitride, and the like, and, for applications such as building blocks, inorganic ceramic clays, silica sand and other like particulate aggregates. The particulate metal, surfactant system and viscosity-modifying and gel strengthening agent are present in essential yet relatively minor proportions relative to the hydrogel and ceramic components. In addition, inorganic fibers may be included in the composition to attain yet additional strength in the eventual porous ceramic where needed.

The foregoing composition is described with reference to generally identifiable constituents of the composition at the time of its molding or extrusion and setting, but the general process of preparing the composition utilizes more fundamental components which, upon admixture, result in the formation of the described hydrogel (i.e., rather than addition of the hydrogel as an identifiable separate ingredient). The hydrogel is formed from a water soluble source of silicate and a water soluble source of aluminate, and the remaining components of the castable composition (e.g., ceramic materials, surfactant, gel strengthening agent, particulate metal, fibers) can be added to or distributed between one or both of the aluminate or silicate compositions. Upon admixture of these two separately prepared and maintained aqueous compositions or slurries, there is formed an aluminosilicate hydrogel which serves to bind together all components of the composition. The hydrogel binder is self-setting at ambient conditions and is capable of setting and binding the composition to a generally self-supporting structure within a brief but controllable time.

According to the present invention, the component parts of the ceramic composition are admixed to form a moldable composition, generally adding the silicate slurry to the aluminate slurry. Mixing is done in this fashion because the aluminate slurry acts to retard the gelation time while the silicate slurry acts as an accelerator. Therefore, if the aluminate slurry is added to the silicate slurry, the possibility exists for a rapid, but partial gelation to occur which would, in effect, result in an incompletely set mix. Before any substantial self-setting of the composition occurs, it is cast or molded or extruded to the desired shape, taking into account, of course, that the composition is intended to foam and expand to attain the final desired configuration. During the self-setting reaction, additional reaction takes place within the composition in which the particulate metal reacts with alkali (e.g. sodium) compounds in the composition to produce, inter alia, hydrogen gas. By arranging the self-setting hydrogel reaction to be of suitable duration, the composition increases in volume as a consequence of the internal gas generation and takes on a porous nature as the gas evolves within and from the composition. Then, as close as possible to the cessation of gas evolution, the in-situ hydrogel formation causes the composition to set in the desired porous molded configuration.

Where the intended ultimate use of the porous ceramic article is in high temperature environments and/or environments involving substantial temperature cycling, it generally is necessary to further treat the self-supporting, molded structure to substantially remove therefrom or therein compounds which would inhibit the thermal shock resistance of the ceramic article, e.g., compounds which lead to formation of glassy phases (e.g., compounds of alkali metals or phosphorus or boron, etc. which might be present as a consequence of the need to employ water-soluble forms of the silicates and aluminates used to form the hydrogel or by virtue of other added components). Such treatment can include removal of such compounds per se and/or alteration of such compounds by ionic exchange. Thereafter, the structure is dried to remove any water therefrom, and is then fired at suitable conditions to result in the ultimately-desired shaped porous ceramic article.

Also according to a preferred embodiment of the invention, processes are provided for arranging for a porous ceramic membrane layer to be present on one or more surfaces of the article. This porous ceramic membrane layer can be utilized, for example, to provide on selected surfaces of an article such as kiln furniture a smooth skin, or for providing on outlet surfaces of a filter element a thin porous layer of smaller average pore size than exists throughout the remainder of the filter so as to act as a final filter for increasing the overall filtering ability of the element.

Preferred embodiments of the invention will now be described with reference to the accompanying drawings wherein:

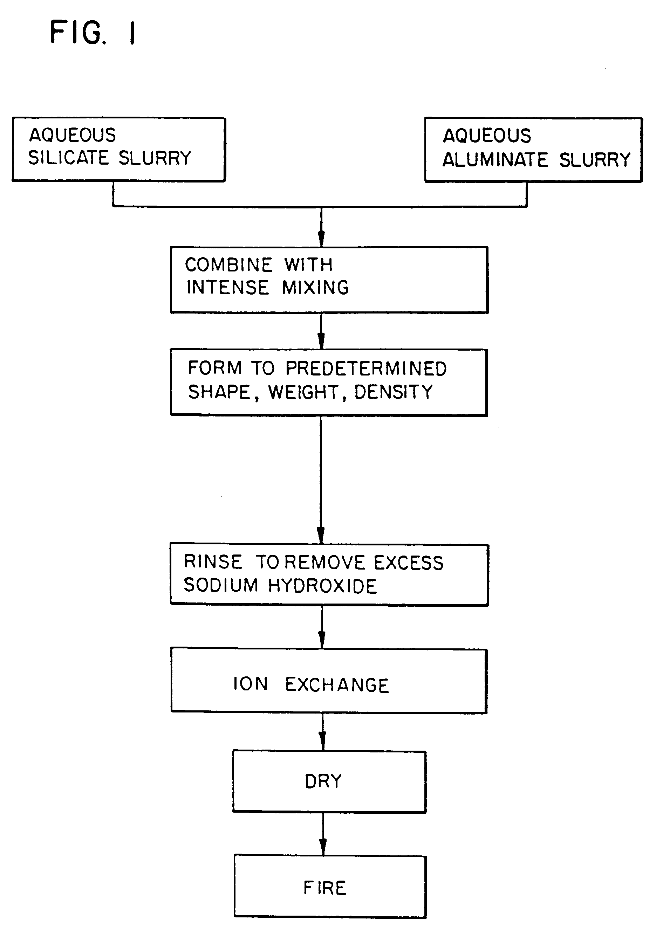

FIG. 1 is a process flow chart illustrating the generalized steps of the process of the present invention for arriving at shaped porous ceramic articles, including certain preferred process and compositional aspects.

FIG. 2 is a graphical depiction of the effect of a particular viscosity-modifying and gel strengthening agent, silica fume, on the viscosity of the foamable composition.

FIG. 3 is a graphical depiction of the effect of silica fume content on the green modulus of rupture (MOR) strength of porous shapes cast according to the invention.

FIG. 4 is a graphical depiction of the effect of aluminum metal content on the pore size of shapes made according to the present invention.

FIG. 5 is a graphical depiction of the effect of aluminum metal content on the density of porous shapes made according to the invention.

FIG. 6 is a graphical depiction of the rate of removal of sodium from a porous ceramic shape during water rinsing in accordance with the invention.

FIG. 7 is a graphical depiction of the rate of sodium removal from a porous ceramic shape utilizing a combined rinsing/ion exchange cycle according to the invention.

FIG. 8 is a schematic sectional view of an apparatus for effecting rinsing and ion exchange in a porous ceramic shape according to the present invention.

FIG. 9 is a graphic depiction of the rate of sodium removal from porous ceramic shapes utilizing the apparatus of FIG. 8.

FIG. 10 is a graphical depiction of the effect of solids content on viscosity for a number of aggregate materials.

FIG. 11 is a graphic depiction of the effect of silica fume on viscosity for one of the aggregates shown in FIG. 10.

The present invention provides a moldable ceramic composition, and thus enables the preparation of final ceramics of the shapes and sizes most suitable for any particular end use and for optimized geometric configuration in such end use. Moreover, the nature of the composition permits the eventual ceramic to retain its as-molded condition yet possess porosity making it suitable for a wide variety of end uses requiring such porosity, such as particulate filters, kiln furniture, lightweight building blocks, and the like. In this regard, the composition and process of the invention offer substantial advantages in ease of processing and economics as compared to other known methods for preparing porous ceramics of some defined shape, such as the impregnation of foamed polyurethane or other resinous structures with thixotropic ceramic compositions followed by firing to decompose the carrier foam (see, e.g., British Patent Specification No. 1,596,446 and U.S. Patent Nos. 3,833,386 and 4,332,753) or other methods known in the art (see, e.g., U.S. Patent Nos. 3,419,495; 3,466,221; and 3,450,547).

In the description provided hereinafter, details are given first as to the foamable composition per se, thereafter as to certain processing features, applicable to some or all of the potential end uses, such as alkali metal removal or formation of a porous ceramic membrane layer, and thereafter details as to particular end uses.

### Foamable Ceramic Composition

The aluminosilicate hydrogel portion of the composition of the present invention is, in essential respects, as described in US-A-4,357,165 and 4,432,798, As described in those patents, the hydrogel results from the admixture of water soluble sources of both silicate and aluminate (typically, sodium silicate and sodium aluminate), which admixture then self-sets at ambient temperatures in times which can be exceedingly short (e.g., on the order of as little as a few seconds but typically on the order of a few minutes), but nevertheless can be controlled by predetermined choice of molar ratio between aluminate and silicate, concentration of water, and temperature. The ability to exercise control over setting times for the hydrogel binder leads to important advantages with respect to attainment in the present invention of molded ceramic articles of both desired geometry and desired porosity. Also described in the above-noted patents is the utilization of the hydrogel components along with granular refractory particles to produce, e.g., molds, by virtue of the self-setting hydrogel serving to bind the granular materials into a self-supporting structure.

According to a preferred embodiment of the present invention, the separately prepared and admixed components for forming the aluminosilicate hydrogel have added to them and/or distributed between them the remainder of the components which will make up the moldable foamable ceramic composition and the eventual porous ceramic shaped article. As earlier noted, the essential elements of this composition, besides the hydrogel-forming constituents, are particulate ceramic materials, particulate metal powder, a viscosity-modifying and gel strengthening agent such as silica fume, and a surfactant component, with ceramic fibers or other conventional materials optional. The particulate ceramic materials generally will be present in the overall composition in a weight percentage of from 50% to 90%, preferably from 60% to 70%. In a preferred embodiment of the invention for end uses requiring refractoriness, the ceramic materials included in the composition will be chosen from cordierite, calcined kyanite and mixtures thereof, with most preferred compositions containing nearly equal weight proportions of both cordierite and calcined kyanite, e.g., from 30 to 35% of each ceramic.

According to the invention, the requisite porosity in the final ceramic article is provided as a consequence of in situ reaction between metal powder and alkali compounds (e.g., sodium hydroxide) present in the moldable composition, resulting in development of hydrogen gas as a reaction by-product. As a consequence of this internal gas production and evolution, the composition will expand in volume in the mold (or during extrusion as the case may be) and develop porosity, the quantity of the composition obviously being regulated to take into account the expected (and predetermined) degree of expansion within the mold or during extrusion to arrive at the desired final density and size of the article. At the same time, the surfactant present in the composition serves to break up the bubbles of evolving gas in the aqueous composition to achieve, controllably, suitably small bubbles and to assure that the porosity developed in the structure will be predominantly of the open-celled type, e.g., as required for filtration uses, or predominantly of the closed-cell type as useful, e.g., for applications where lower thermal conductivity, higher strength, buoyancy or the like is the ultimate criterion.

The preferred particulate metal is aluminum, although other metals or metal alloys such as silicon or ferrosilicon which similarly will react with alkali compounds present in the composition to produce hydrogen gas also can be employed.

For most generalized compositions, the amount of surfactant and metal (e.g. aluminum) powder will be relatively small compared to the other components of the system, with the typical levels of addition of the surfactant being in the range of from 0.05 to 1.0 percent by weight of the total composition and the metal powder being in the range of from 0.05 to 0.5 percent by weight of the total composition. Preferred ranges of addition for these materials are 0.4 to 0.8 percent by weight for the surfactant (most preferably about 0.6%) and 0.1 to 0.2 percent by weight for the metal powder (most preferably about 0.15%), and a preferred ratio between the surfactant and metal powder is generally from 2:1 to 8:1, most preferably about 4:1.

Among the preferred class of surfactants (which may be used alone or in combination) for use in the invention are the silicone glycols such as are available from the Dow Chemical Company for use, e.g., in producing polyurethane foams. These surfactants have a stabilizing effect on the gaseous by-products produced and are available in a variety of customized formulations (based upon the silicone glycol chemistry) that are designed to control bubble (or cell) size as well as to control or dictate whether the cells are mostly open or mostly closed. For example, the surfactants from Dow Chemical known by the tradenames DC 190, DC 198, Q2 5160 and Q2 5125, provide a mostly open cell structure in the present invention, while other surfactants from Dow Chemical, such as the tradename products DC 193, DC 197, DC 5103 and DC 5098, provide a mostly closed cell structure in the present invention. In addition, still other Dow Chemical silicone glycol surfactants are available to further customize a foamed cell structure with a controlled or limited amount of cells opened, such as the tradename products Q2 5243, DC 5043, Q2 5169, X2 5256, X2 5258 and Q2 5244. Although the silicone glycol type surfactants are preferred, a variety of other non-silicone surfactant types also may be employed, such as those available from Air Products & Chemicals, Inc. under tradename LK-221 and LK-443.

With respect to the aluminum or other particulate metal, the average particle size of the powder employed generally will be in the range of from about 1 to 44»m, and preferably about 6-9»m, with the understanding that the larger the surface area of the metal present in the composition, the more vigorous and extensive will be the foaming reaction.

Another essential ingredient of the composition of the invention is a viscosity-modifying and gel strengthening agent, preferably silica fume, although other suitable agents may be employed. Silica fume is a by-product collected in the airstream during the reduction of silica sand by coal or coke in an arc furnace to make metallurical-grade silicon metal. The particulates are hollow spheres, roughly 0.25»m in diameter, composed of about 96% silica and having a light carbonaceous layer on their surface. Although the mechanism by which silica fume operates in the compositions of the invention is not entirely understood, its addition brings about a number of advantages, such as lowering the viscosity of the composition for a given solids content (thus permitting higher solids loading) and reinforcing the gel network (without increasing viscosity) to give greater green strength. Without the presence of the viscosity-modifying and gel strengthening agents such as silica fume, the hydrogel bonded aggregate structure appears more prone to cracking during drying operations. By reinforcing the gel structure, the silica fume reduces shrinkage as the molded article is dried. Generally, it has been found that the silica fume is effective at levels of from 0.25 to 10 percent by weight of the total composition, preferably from 1 to 4 percent by weight, and most preferably from 1 to 2% by weight.

As noted, viscosity-modifying and gel strengthening agents other than silica fume can be employed, such as fly ash, manganese oxide fume, ferrosilicon fume and the like. Based upon experimentation to date, the chief characteristic required to be possessed by the gel strengthening agent is the small, spherical shape enabling it to react readily with the matrix binder and/or aggregate constituents.

As earlier noted, the moldable ceramic composition may advantageously further comprise ceramic fibers, such as Kaowool™, Fiberfax™ and Fiberkal™ type aluminosilicate fibers, Saffil™ alumina fibers, silicon carbide whiskers and calcium silicate fibers, to give further rigidity to the molded structure. Typically, these fibers can be present in an amount up to as much as 60 percent by weight of the composition, but most typically are employed in amounts from 1 to 4% by weight.

In the present invention, the components of the foamable ceramic composition are selected to yield a particular setting time (e.g., by variation in aluminate/silicate ratio and/or solids content, and taking into account the temperature at which the composition will be molded), consistent with the anticipated duration of the foaming process in the mold or during extrusion. As noted earlier, a distinct advantage of the invention is that the setting time can be arranged to achieve a particular dimensionally stable degree of gelation at or very near the time when the gassing reaction ceases, thus insuring retention of the developed porosity in the molded and eventually fired article. If gelation occurs too soon, the composition lacks the freedom to develop and accommodate the desired degree of porosity and/or may result in cracking of the set structure as gas continues to be evolved, while if gelation is delayed too long, the developed porosity will have a tendency to break down before the structure can be firmed up. While this latter problem might be curable by excess utilization of surfactant and/or aluminum, cure in this way may introduce into the article too substantial amounts of components making control more difficult and which may adversely affect final product characteristics.

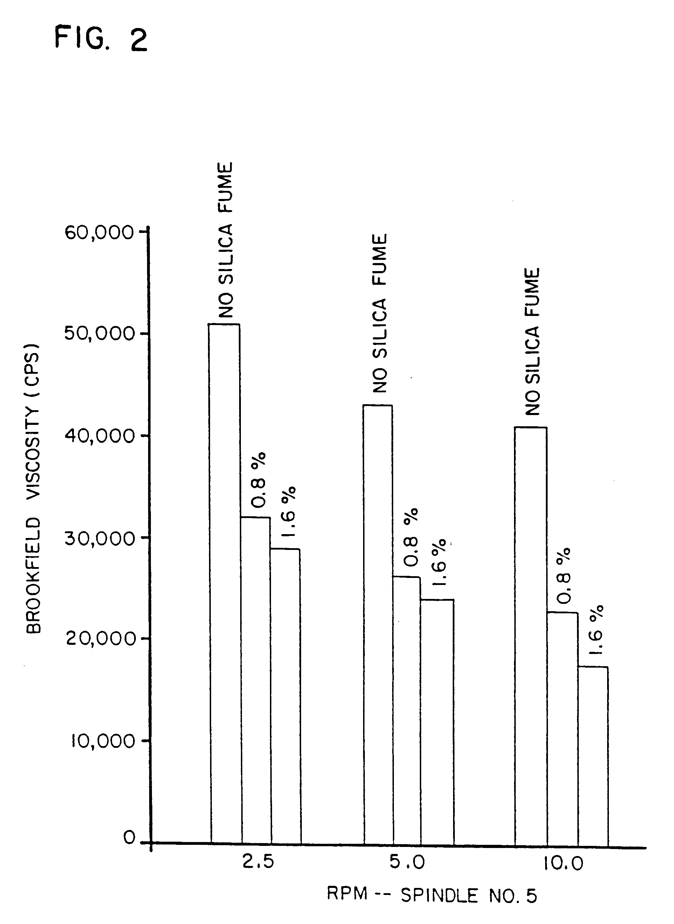

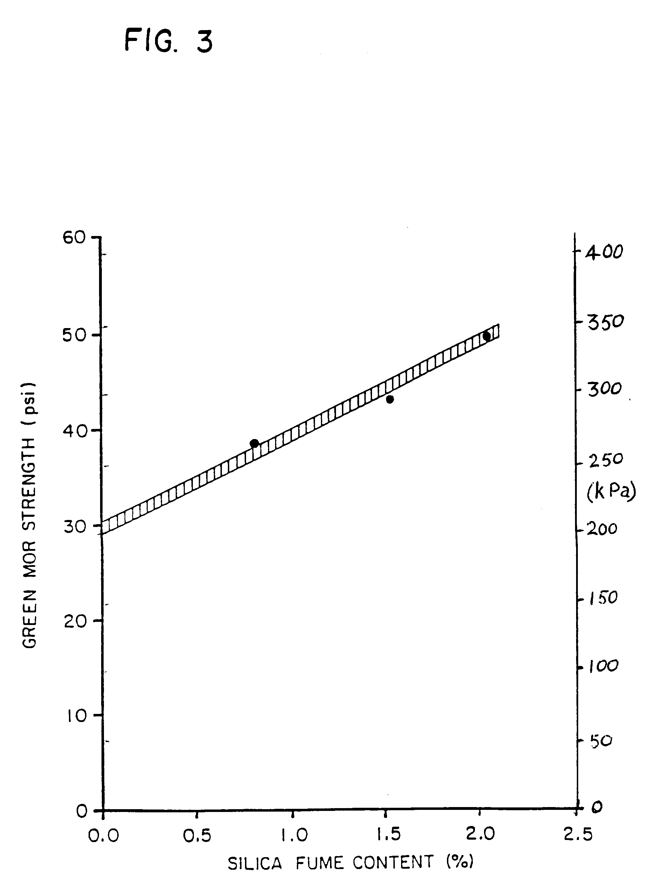

The effect of particular compositional aspects upon certain product characteristics is graphically depicted in FIGS. 2 through 5. Thus, as shown in FIG. 2, the presence of silica fume in the composition results in substantial reduction of the viscosity of the composition, the measured reduction being greater at higher spindle speeds on the measuring device and also greater with increasing amount of silica fume. As shown in FIG. 3, the green strength (as measured by the modulus of rupture or MOR) of the molded shapes increases, generally linearly within the region shown, with increasing silica fume content.

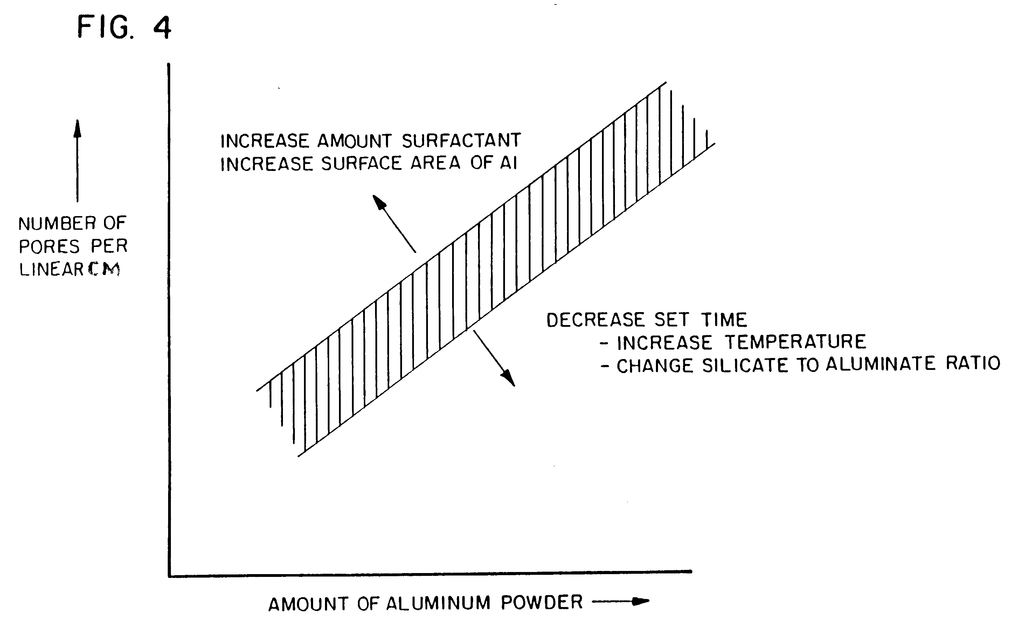

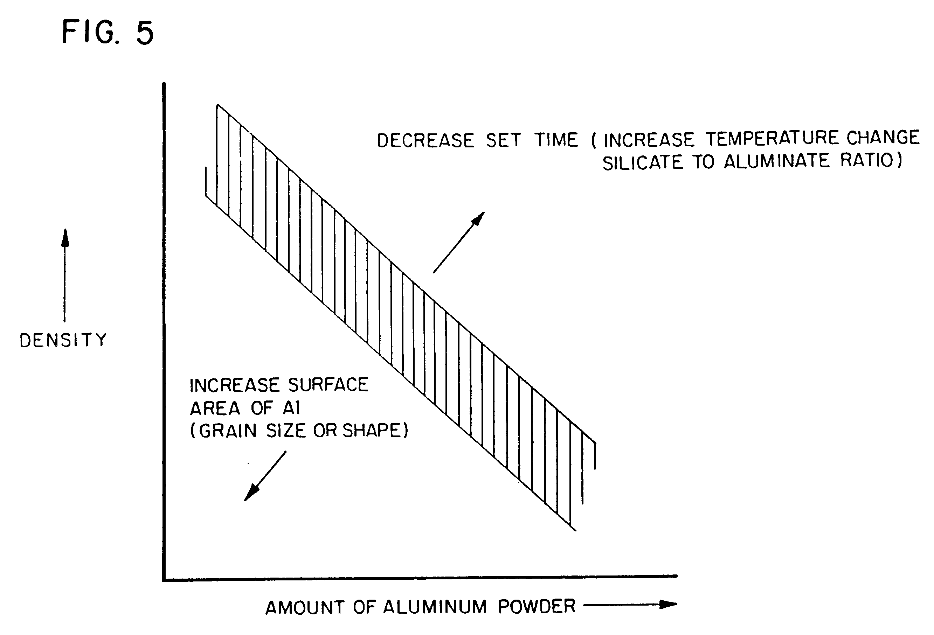

FIGS. 4 and 5 graphically depict the interrelationship among the amount of aluminum powder and amount of surfactant upon the pore size and density of the porous shapes. Thus, increase in the amount of surfactant or increase in available surface area of aluminum (increase in amount or also, e.g., by using either a flaked aluminum or smaller grain size) increases the number of pores per linear inch in the molded product. As shown in FIG. 5, increase in slurry temperature or other means to decrease set time results in an increase in density of the molded product, while a decrease in the available surface area of aluminum powder also increases the density.

As noted, the foamable composition can be cast or injection-molded into a mold of desired configuration, in which the foaming/expansion of the composition and the aluminosilicate hydrogel formation then take place to form a self-supportable shape in the configuration of the mold. Alternatively, the foamable composition can be extruded, with foaming/expansion and hydrogel formation occurring during the extrusion process, into a foamed self-supportable shape which, if necessary, can then be cut into the desired configuration. Depending upon end use, the shaped porous ceramic article can be dried for use as is or, alternatively (and essentially for most applications) will be dried and then sintered or fired.

### Alkali Metal Removal

Particularly for those end uses where elevated temperature and/or wide-ranging temperature cycling will be encountered (e.g., diesel exhaust filters, kiln furniture, furnace linings), firing is required and it generally is necessary to treat the porous molded article prior to firing to substantially remove or eliminate alkali or other fluxing and/or glass-forming ingredients therefrom or therein in order to increase the refractoriness of the eventual fired porous ceramic article. Typically this will be achieved by means of a leaching and/or ion-exchange treatment, and preferably is accomplished by a first water leach followed by ion exchange.

In the preferred embodiment of this invention, the dealkalizing of the porous shaped ceramic is effected by treatment of the porous shape with water to remove leachable alkali compounds, followed by treatment with a dilute aqueous solution of a non-alkali metal salt to effect exchange of the cation thereof for alkali metal cation in the porous article. Thereafter, the porous article can be further rinsed to insure that any residual anions (e.g., chlorides) of the non-alkali metal salt are removed.

In the most preferred embodiment of the invention, the non-alkali metal salt is an ammonium salt.

The prior art contains reference to a number of techniques for dealkalizing of silicate compositions, although not strictly in the context of preparing refractory ceramic articles. For example, in a paper entitled "Durable Glass By Reconstitution Of Hydratable Sodium Silicate Glasses," published by the American Chemical Society in 1982, Bartholomew, et al. discuss a procedure utilizing either sodium or ammonium nitrate solutions to reduce the alkali content of 12-21% Na₂O-containing hydrated sodium silicate glasses by 50% over a several hour treatment period, as well as a more efficient process utilizing a 0.6 molar solution of ammonium nitrate at 80°C to reduce the alkali content of a 2mm thick hydrated sodium silicate glass, containing 21% sodium oxide, to about 100 ppm sodium in a 24-hour period.

In U.S. Patent No. 4,340,642 to Netting, there is disclosed a process wherein aluminum sulfate is used to enrich the surface layer of sodium silicate-derived spherical particles.

In U.S. Patent No. 3,653,864 to Rothermal, alkali metal oxide-containing glasses are dealkalized by first hydrating the alkali to a hydroxide, preferably by autoclaving, and then by contacting the glass surface with a non-acidic, non-aqueous solvent having a high dielectric constant, such as formamide or dimethyl formamide.

With reference to the particular aluminosilicate-based foamable ceramic composition previously described, and by way of further explanation, it should be understood that, as formed, for example from sodium aluminate and sodium silicate, the sodium aluminosilicate bond contains an excess of sodium ions (as much as 55%) over the assumed stoichiometric chemical structure (one mole of sodium oxide to one mole of aluminum oxide and two moles of silicon oxide, i.e., Na₂O:Al₂O₃:2SiO₂:H₂O).

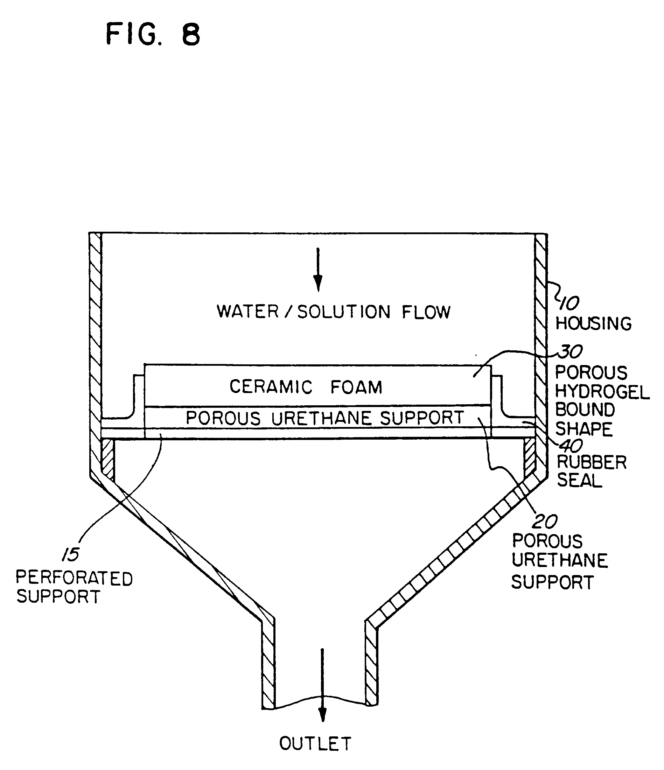

To remove a sufficient amount of this excess sodium in order to improve the refractoriness of the fired article, a three step process was developed which includes: 1) water leaching/rinsing to remove about 55 percent of the sodium present as free sodium hydroxide; 2) an ion exchange process utilizing an ammonium salt solution to remove additional sodium linked to the hydrogel network; and 3) an additional, although optional, water rinse to remove residual anion content. Two techniques were evaluated following the above procedure. The first method simply used a closed system in which the liquids in each of the above three steps were recycled in a constant volume container, changing the entire solution of one step before going on to the next, thereby allowing the removal of sodium via a diffusion or migration from the molded porous part to the recirculating, i.e., flowing, solution. The second method used a specially designed apparatus, as shown in FIG. 8, in which the water and ion exchange solutions were forced through the molded part with no recirculation. The advantage of the second procedure is in the time required for effecting sodium removal.

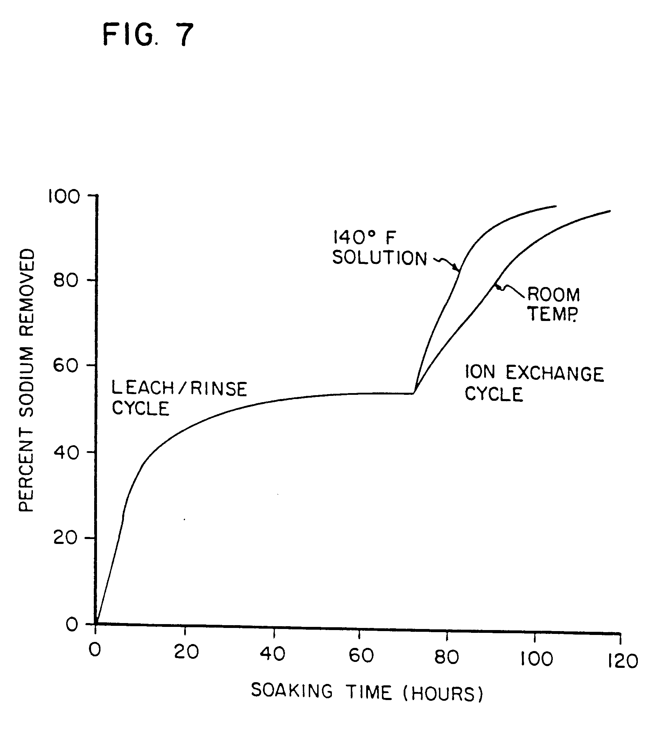

The constant volume system was used initially to evaluate the effectiveness of the various sodium removal solutions involving just water, acids (such as hydrochloric and acetic, etc.), other soluble salts (such as aluminum chloride, aluminum sulfate, magnesium chloride, etc.) and ammonium salts. Table I summarizes these initial experiments that were obtained for a porous ceramic plate component with an initial 5 percent sodium oxide content at 0.9 g/cc foamed wet density. As can be seen from the data (see FIG. 7), rinsing/leaching in deionized water for 72 hours without changing the water reduces the sodium oxide content down from the initial 5% level to 2.3-2.4%, i.e., approximately 50%. At this point, the solution was changed to the particular water, acid or salt solution being evaluated to further remove the sodium. Based on the results tabulated in Table I, it was determined that ammonium chloride salt solution is the most effective material evaluated in removing sodium either by direct dissolution or ion exchange.

**TABLE I**

| Summary of Ion Exchange Experiments in a Constant Volume Bath to Remove Sodium from Sodium Aluminosilicate Hydrogel Bonded Porous Plates | | |
|---|---|---|
| Ion Exchange Medium | Salt or Acid Concentration (wt.%) | Residual Na₂O (%) |
| Tap Water | - | 1.77 |
| Deionized Water | - | 1.95 |
| Hydrochloric Acid | .8 | 1.37 |
| Acetic Acid | 1.3 | 1.6 |
| Aluminum Sulfate | 2.4 | 1.1 |
| Aluminum Chloride | 1.0 | 1.8 |
| Magnesium Chloride | 1.0 | 1.6 |
| Ammonium Chloride | 1.7 | 0.15 |

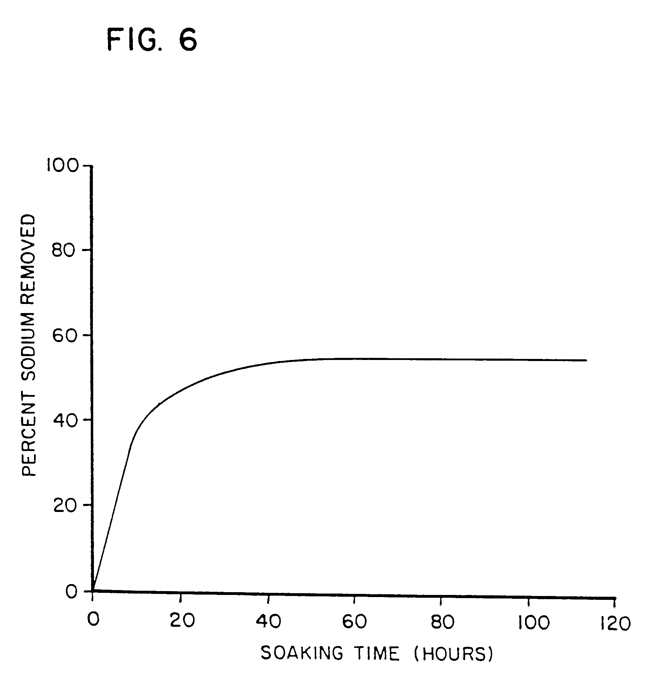

FIG. 6 illustrates the sodium removal rate during the water leach/rinse cycle, showing that after about 30 hours, the rate of sodium removal approaches zero, i.e., no further sodium removal occurs. Similarly, in FIG. 7, it can be seen that when the water leach solution is then followed by an ammonium chloride solution, a rapid increase in the rate of sodium removal is achieved, followed by a decrease in rate after about 30 hours. It also should be noted that heating the ion exchange solution significantly reduces the time required for essentially complete sodium removal as compared to use with a room temperature solution.

A series of further experiments was also performed to determine the optimum amount of ammonium chloride and water in these constant volume tanks with respect to the total amount of sodium being removed. In the work referred to above, 1,28 kg (2.6 pounds) of ammonium chloride were used to remove (or more precisely ionically exchange NH₄⁺ for Na⁺) one pound of sodium oxide. This amount was determined by balancing the following equation:

Na₂O+3NH₄Cl+xH₂O → 3NH₄OH+2NaCl+HCl+(x-2)H₂O

To determine whether this 2.6:1 ratio was optimum, experiments were performed comparing a 1.3:1 and 5.2:1 ammonium chloride to sodium oxide ratio to the 2.6:1 ratio. While the lower ratio system displayed slower exchange rates, the higher ratio only provided slightly greater exchange rates and, therefore, was not considered to provide substantial benefit commensurate with the added cost.

In a similar fashion, the amount of water or sodium oxide dilution level was also varied from 75:1 (water to sodium oxide) to 300:1. As before, the lower level was not quite as effective as a 150:1 ratio employed in the work referred to above, with little improvement seen by going to the 300:1 ratio.

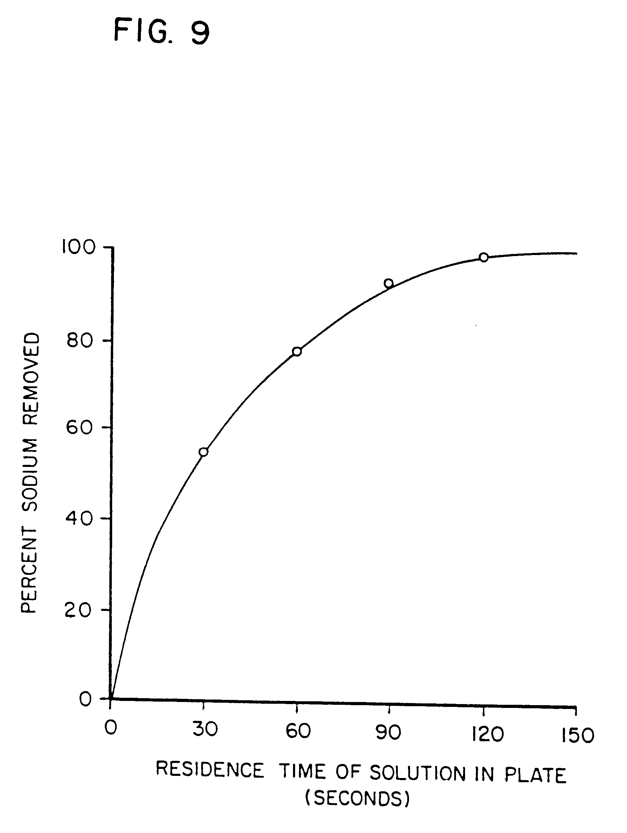

The flow through design using a type of apparatus as that illustrated in FIG. 8 has been found to be considerably faster on sodium removal. In this device, shown in open section, a liquid-tight housing 10 having a perforated bottom portion 15, has arranged within it (so as to rest on bottom portion 15) a porous support 20 (e.g., urethane) on which is placed the ceramic foam element 30 to be leached. A rubber seal 40 is arranged to insure that all liquid flow passes through the foam element 30. Table II summarizes the results obtained using this design. The procedure in this case is to pour a given amount of pure water (again, deionized preferred) through the porous cast component until about 55% of the original sodium content is removed i.e., down to the stoichiometric hydrogel composition. After the 45% remaining sodium level is achieved, another quantity of a 1% NH₄Cl solution is poured through the same part until essentially a 100% sodium removal level is obtained. After this ionic exchange step, pure water is again poured through the foam to remove any residual chloride ions. At this point, the sodium content in the part should be less than 200 ppm as shown in Table II and schematically represented in FIG. 9. The entries in Table II represent sequential steps and the times set forth in Table II are for each particular step, i.e., total time is the total for all sequential steps.

**TABLE II**

| Effect of Leaching (DI Water) and Ion Exchange (1% NH₄Cl Solution) on Residual Sodium Oxide Content in Final Fired Porous Ceramic Plate | | | | | |
|---|---|---|---|---|---|
| Amt. Liquid (Liters) | Type Liquid | Time To Flow Thru (Sec.) | Est. Amt. Na in Part (g) (1) | %Na Removed (%) | %Na₂O Remaining in Plate (%) (2) |
| - | - | - | 28 | 0 | 6 |
| 10 | DI H₂O | 30-35 | 12.3 | 56.1 | 2.7 |
| 10 | 1% NH₄Cl | 35-40 | 6.0 | 78.6 | 1.3 |
| 10 | 1% NH₄Cl | 35-40 | 2.1 | 92.6 | 0.45 |
| 10 | 1% NH₄Cl | 35-40 | 0.1 | 99.5 | 0.02 |
| 5 | DI H₂O | 15-20 | <0.1 | ∼100 | <200 ppm |

| | | | | | |
|---|---|---|---|---|---|
| (1) Based on 25.4 cm (10 inch) porous place at 0.86 g/cc wet density (846 g wet weight) with essentially 37.7 g Na₂O initial content. | | | | | |
| (2) Based on expected final part weight of 621 g after firing at 1329°C (2425°F). | | | | | |

It will be noted that this aspect of the present invention also has applicability to treatment of any unfired supportable porous ceramic shape containing excess and/or ionically exchangeable alkali irrespective of the fundamental composition of the shape or the process used to produce the supportable porous shape. The invention obviously has particular applicability to treatment of supportable porous shapes made by molding or extrusion of foamable ceramic compositions which rely upon an aluminosilicate hydrogel as the binder for the composition or shape as described herein, this particular applicability being by reason of the fact that such compositions generally make deliberate and substantial use of alkali metal (e.g., sodium) aluminates and silicates as percursors for forming the ultimate aluminosilicate bond and, hence, exhibit limited refractoriness and thermal shock properties in the fired state by reason of the significant level of alkali. However, the invention has applicability beyond this particular system, as for example in clay-bonded aggregate systems in which alkali metal is present in the clays used to form the adhesive bond (e.g., kaolin, bentonite, etc.), or any other system where the presence of alkali resulting from use of particular components would otherwise lead to limited refractory or thermal shock properties in the fired porous article.

In providing a means for safely, efficiently and effectively removing alkali from porous ceramic shapes and thereby produce fired porous ceramic articles of low alkali content, this aspect of the present invention offers the significant advantage of permitting one to make liberal use of alkali compounds in forming the unfired shape without concern for the ultimate effect of the alkali on the refractory or thermal shock properties of the fired ceramic. In this way, greater flexibility is provided to the compounder as well as opportunities for improving economics by liberal use of inexpensive starting materials.

Following this removal of alkali or other fluxing or glass-forming ingredients, the molded article is dried to remove any water therefrom and is then fired in any suitable furnace at the temperatures required (e.g., 1204 to 1427°C (2200 F to 2600°F) to form the shaped porous ceramic article. Depending upon the composition of the moldable ceramic composition and the processing conditions, sintered ceramic refractory articles can be prepared having a broad range of porosity, surface area and the like.

### Formation Of Porous Ceramic Membrane Layer

According to another aspect of the present invention, particularly suitable for production of filters, kiln furniture and the like, provision is made for a thin porous ceramic membrane layer on one or more surfaces of the molded porous ceramic article. By "thin" is meant a layer which is thin relative to the body portion and, in most embodiments, thin per se as in the nature of a skin. By "porous" is meant that the layer contains pores, which may be connected or unconnected depending upon particular applications, and which may be in the form of generally spherical voids or cylindrical channels or the like. By "membrane" is meant to connote a thin layer and is not necessarily an indication that the layer is permeable, although in certain applications it will be.

According to one application of this aspect of the invention, there is described a porous ceramic article for use in particular as a trap for diesel exhaust particulates, comprised of a porous ceramic body portion having pores whose average diameter is designed to assure relatively high permeability throughout the body. Integral with the body, at the exhaust discharge surfaces thereof, there is provided a thin porous ceramic membrane layer having pores whose average size is less than that of the pores within the body portion. It has been found that by proceeding in this manner a larger amount of particulates can be trapped since the smaller particulates that could normally pass all the way through the filter are trapped just below the membrane layer surface, causing more particulates to be trapped in the larger pore cavities on the inlet side of the filter, i.e., in the body portion of the porous ceramic. Because the region or length of the membrane surface is short as compared to the body portion, it is found that no significant increase in clean back pressure is encountered while trapping efficiency for particulates is greatly enhanced.

More generally, this embodiment of the invention has applicability to any use of porous ceramic shapes wherein it is desired that one or more surfaces thereof possess a relatively smooth layer or skin as can be provided according to the invention, irrespective of whether the body portion of the ceramic is of the open- or closed-cell type. Notable in this regard is the provision of smooth-surfaced kiln furniture and molds according to the invention.

In its broadest embodiment, then, this aspect of the present invention provides a porous ceramic article having a body portion of any desired shape and configuration, the body portion having associated with it either open- or closed-cell porosity characterized by pores of generally predetermined average diameter. On one or more predetermined surfaces or external areas of the body portion there is provided, integral with the body portion at that area, a thin porous ceramic membrane layer or skin having pores whose average diameter is less than that of the pores within the body portion and on any remaining surfaces or areas of the body portion.

This embodiment of the present invention provides a variety of techniques for efficient and economical formation of this thin porous ceramic membrane layer on selected surfaces of a porous ceramic shape. All of the techniques are applicable to use with the foamable ceramic composition which is the primary subject of this invention, while some are uniquely suited for such use and others are suitable for use with other systems for making porous ceramic shapes.

With reference to the particular porous shapes produced by the foamable compositions of the present invention, the following techniques can be employed.

In one method, which is also applicable to porous ceramic body portions made by any number of processes, such as by extrusion of compositions containing fugitive components or by processes employing polyurethane sub-structures or by processes utilizing foamable ceramic casting or injection-moldable or extrudable compositions, the body portion, after formation but prior to firing, is treated by applying to one or more surfaces or areas thereof a ceramic paste or slurry containing a fugitive constituent capable of leaving a small pore when removed during a drying or firing operation. The fugitive constituent can be a sublimable compound or a burnable (e.g., carbonaceous) compound, utilized in a size and an amount which will result in pores having an average diameter smaller than that of the pores which will be present in the body portion or at untreated surfaces. During the firing operation, the ceramic paste or slurry becomes integrally associated with (fused to) the porous body portion. Where the formation of porosity within the body portion is itself dependent upon burn-out or sublimation of a fugitive constituent, the firing operation will, thus, simultaneously develop a porous body portion and an integral porous ceramic membrane layer on the treated areas.

In another method, applicable to all processes wherein the body portion is prepared from a foamable, castable or injection-moldable ceramic composition, surfaces of the mold corresponding to the areas on the body portion where the ceramic membrane is desired to be formed, are treated by application thereto (generally onto the mold release agents already present) of a mixture of ceramic powder and fugitive constituent. The castable or moldable composition is then poured or injected into the mold and, after setting and removal from the mold, is found to have associated with it at the areas corresponding to the pre-treated mold surfaces, a thin skin of ceramic material which is rendered porous during the firing step. In this embodiment, it is also possible to eliminate use of fugitive constituents by choosing for the ceramic powder ingredients which are more refractory than those of the underlying body portion, such that during firing, the greater refractoriness of these grains prohibits sintering thereby leaving a partially-sintered, i.e., porous, membrane layer on the preselected areas of the body portion.

Among the preferred methods are those specifically applicable to processes wherein the underlying porous ceramic body portion is formed through use of a foamable, castable or injection-moldable ceramic composition which can be poured or injected into a mold and set therein to assume the mold configuration while at the same time developing porosity of the closed- or open-cell type by virtue of reactions and interactions between and among components of the composition, e.g., involving release of a gaseous constituent, such as the composition which is the primary subject of this invention. One method of forming a porous ceramic membrane layer on preselected surfaces of such body portions involves the application of a ceramic paper (either woven, air-laid, or the like) atop the release agent on one or more predetermined mold surfaces prior to molding the ceramic composition. In this manner, the composition, during foaming, expands into the ceramic paper, thereby laminating or bonding the systems together. On firing, there is developed a porous body portion having on one or more of its surfaces a thin porous ceramic membrane layer by reason of the now integrally-bonded ceramic paper whose pores are on the average smaller than those of the underlying body portion.

In the most preferred methods, for use with foamable, moldable ceramic compositions, formation of a porous ceramic membrane layer is accomplished integral with the formation of the underlying porous body. In situ processing in this manner offers significant advantage in the economics of manufacture of the final ceramic article.

According to one of these preferred methods, the release agent used in the mold, at those preselected areas corresponding to where on the body portion the ceramic membrane is desired, consists of or contains a defoaming surfactant (i.e., a foam suppressor). During the internal development of porosity in the cast or injected composition by virtue of gas-generating reactions therein, the defoaming agent acts to sufficiently suppress the reaction to keep the pores at these surfaces controllably small, i.e., smaller than those within the body portion and at surfaces not in contact with the foam suppressor. Since the surfactant is per se a release agent or is associated with a release agent, no problems are encountered in demolding the part. The choice of defoaming surfactant is dependent upon the chemistry of the fundamental foaming reaction. Thus, in the base of air entrapment type foaming (i.e., in situ gas generation and surfactants to size and stabilize the bubbles so formed), commonly used surfactants for the defoaming of detergents, paints, varnishes and the like are eminently suitable.

In the specific context of the foamable ceramic compositions which are the primary subject of this invention, a number of uniquely applicable techniques have been developed for in situ formation of a porous ceramic membrane layer or skin on preselected surfaces or areas of the porous ceramic body portion.

According to one such method, there is used, as the release agent per se or along with a release agent, a foam suppressing agent consisting of an organic compound having an unhindered hydroxyl group (i.e., an OH-"tail"), such as common alcohols, polyethylene glycol, polyvinyl alcohol, and the like. By provision of such agents on mold surfaces corresponding to those areas of the body portion where the porous ceramic membrane layer is desired, the hydroxyl group apparently absorbs the outgassing hydrogen molecules at these surfaces, thereby restricting their growth. A porous ceramic membrane is attained by virtue of the underlying foaming reaction and the fact that hydrogen gas bubbles at the desired surfaces are kept small.

In another method applicable to this aluminosilicate system, mold surfaces corresponding to those where a porous ceramic membrane is desired to be formed are provided with a gel accelerating agent, preferably along with a release agent, and most preferably along with a release agent consisting of or containing an OH-tail as above described. The gel accelerating agent serves to locally set the aluminosilicate hydrogel prior to reaction between the particulate metal and alkali compounds in the composition, with the result that in the fired article, the pores at these treated surfaces are smaller than those in the underlying body portion or at other surfaces.

As earlier noted, a characteristic of the aluminosilicate hydrogel system is that gelation can be accelerated by variation in concentration of soluble silicate and soluble aluminate. The nature of the system is such that more rapid gel formation will occur both at conditions of lower soluble silicate concentration (i.e., by dilution of the system) as well as at conditions of high concentrations of soluble silicate and aluminate (e.g., by minimizing water in the system). Thus, additional methods to achieve localized rapid gelation of the aluminosilicate system at surfaces where a porous ceramic membrane is desired include incorporation of water along with the release agent at the desired mold surfaces, the water being in an amount such that the combined, but not yet set, silicate and aluminate mixture absorbs a sufficient portion of this water to locally dilute the original amounts of soluble silicate and soluble aluminate, thereby locally reducing the gel time at these surfaces as compared to that occurring throughout the remainder of the composition. In another method, it can be arranged that water is locally removed from surfaces where a porous ceramic membrane is desired so as to bring about more rapid gelation of the aluminosilicate system at those areas (by virtue of increased silicate and aluminate solids content). This can be achieved, for example, by treating the corresponding mold surfaces with a hydroscopic release agent (or a release agent composition containing a hydroscopic agent) or by arranging a layer of dry paper at the required mold surface or by localized heating of the required mold surface.

Another method applicable to the aluminosilicate hydrogel system as well as with other catalyzed silicate systems is to bring about a change in pH on the surface where the porous ceramic membrane is required. For example, incorporation of an acidic component in the release agent such as acetic acid or dilute hydrochloric acid will locally accelerate the gelation prior to the onset of foaming.

It should be pointed out that the process of using a gel accelerator to cause a membrane effect on a castable or moldable foam also can be extended to other catalyzed silicate systems as indicated above, as well as to other self setting binder systems, both inorganic and organic in nature. For example, this same process can be used to form a membrane in a phosphoric acid containing binder system in which the acid reacts with alumina materials (or compounds) to form an aluminum phosphate inorganic bond. Addition of metal powders to such a system will generate gaseous by-products that will foam the mixture to produce a porous ceramic body portion. If a ceramic membrane is desired, then the incorporation of a gel accelerator such as a stronger concentration of phosphoric acid in the release agent would produce this result.

Similarly, in an organic binder system such as a phenolic thermosetting resin system in which the phenolic resin is catalyzed with an acidic solution, gaseous byproducts could again be generated with metal powders to bring about a porous ceramic body portion, and again by incorporating a stronger acid in the release agent the membrane effect is accomplished.

### Applications

Although the foamable ceramic compositions described herein, as well as the techniques for reduction of alkali metal amounts and for formation of thin porous ceramic membrane layers, are useful for producing dried unfired, sintered, or fired ceramics for any number of uses as heretofore discussed, a number of particularly important applications bear additional discussion.

"Diesel exhaust traps" are filtering devices designed to remove particulate material (e.g., soot) from the exhaust of automobile or truck diesel engines, a need dictated to a large extent by increasingly stringent governmental regulations in the United States and European countries regarding maximum allowable particulates in automotive emission gases. Generally, soot trapped by the filtering devices is then periodically combusted in the filter so as to regenerate the filtering surfaces, the combustion being initiated, for example, by electrical means or fuel burner devices associated with the overall trap design, or by variable operation of the engine itself or other means to provide to the filter an exhaust stream sufficiently hot to initiate the combustion process.

As a consequence of the generalized designs for particulate traps of this type, the filtering element is required to have a number of properties. Obviously, it is essential that the filtering element exhibit porosity which permits trapping of particulates, but at the same time it is essential that the construction of the filter be such that exhaust gases can travel relatively easily therethrough without creation of any significant degree of back pressure. Moreover, it is necessary that the filtering element present a substantial filtering surface per unit length, area or volume so as to permit the element to be fabricated in an overall size consistent with the constraints imposed by the size of the exhaust systems of diesel-powered automobiles and trucks. Because of its exposure to hot exhaust gases, and even higher temperatures during a combustion/regeneration cycle, the filtering element also necessarily must possess structural and dimensional stability under such conditions.

The prior art has sought to provide filtering elements for diesel particulate traps possessing these physical characteristics by resort to a variety of materials. Early efforts relied upon stainless steel mesh or coils of fibrous metallic wire as filtering materials, as evidenced by U.S. Patent Nos. 3,937,015 and 4,270,936, respectively. More recent efforts have concentrated upon ceramic materials since they generally possess excellent structural and dimensional stability under stringent (i.e., high temperature) operating conditions, with the requirement that the trap exhibit porosity effective to filter soot from exhaust gases being accomplished by various compositional and processing techniques. Most notable in these efforts has been the utilization of so-called ceramic monolithic honeycomb filtering elements as described, for example, in U.S. Patent Nos. 4,276,071 and 4,364,761 assigned to General Motors Corp.; U.S. Patent Nos. 4,329,162; 4,415,344; 4,416,675; 4,416,676; 4,417,908; 4,419,108 and 4,420,316 assigned to Corning Glass; and U.S. Patent Nos. 4,283,210; 4,293,357; 4,307,198; 4,340,403; and 4,364,760 assigned to NGK Insulators. Essentially, these elements consist of a monolithic ceramic having a multitude of internal parallel chambers separated by thin porous ceramic internal walls, with a number of the chambers being end-sealed so as to force particulate-containing exhaust gas to traverse across a porous wall before exiting the element. Generally, these elements are formed by an extrusion process, and materials are included in the compositions which are burned out during the firing process so as to provide the requisite porosity in the internal filtering surfaces. In another process, as reflected in U.S. Patent No. 4,363,644 assigned to Nippon Soken, foamed, structural polyurethane systems are utilized in admixture with inorganic materials in processes wherein the polyurethane burns out during firing so as to leave behind a ceramic structure having a variety of inter-connected open cells for trapping particulates.

While the structural and dimensional properties of ceramics generally lend themselves well to utilization as the material from which filter elements for diesel traps are constructed, it is not an easy or inexpensive matter to achieve from ceramic materials elements possessing the porosity needed to effectively and efficiently filter soot as well as permit exhaust gas flow without substantial build-up of back pressure. For example, in the highly permeable reticulated foam filters in the art, a condition can occur ("blow-off") in which soot already collected in the filter can be dislodged as a consequence either of excessive build-up or sudden increase in the velocity of the exhaust gas stream. Of additional importance, efforts toward optimizing the geometry of diesel filter trap designs (so as to facilitate inclusion of the filter in the exhaust area of a vehicle, or to maximize filtration, or to facilitate regeneration or removal of the filter element) can be severely limited by the inability to produce such shapes efficiently (or at all) utilizing ceramics.

Through use of the compositions and processes of the present invention, excellent diesel particulate traps of any desired geometry can be prepared. To this end, the foamable ceramic composition containing alkali metal aluminate, alkali metal silicate, metal powder, surfactant and viscosity-modifying and gel-strengthening agent, all as earlier described, contains suitable refractory ceramic materials, also as earlier described, and either cast or injection molded to a suitable expanded porous shape of desired configuration, or extruded as a porous expanded shape to either the desired configuration or a gross configuration from which the desired shape can be cut. In each case, the surfactant is chosen to provide an open-cell porosity suitable for filtering applications. Also, in the preferred embodiment of the diesel particulate trap, the porous unfired shape is treated to reduce the alkali metal content thereof so as to increase refractoriness in the fired filter, and also is arranged to have on at least the outlet filter surface an integral thin porous ceramic membrane layer, also of open-cell porosity, whose pores have an average size less than that of the pores in the remaining portions and surfaces of the filter. After alkali removal, the porous self-supportable shape is dried to remove any water therefrom and is then fired in any suitable furnace at the temperatures required e.g., 1204 to 1427°C (2200° F to 2600°F) to form the shaped porous ceramic filter article. Depending upon the composition of the moldable ceramic composition and the processing conditions, sintered ceramic refractory articles can be prepared having a broad range of porosity, surface area and the like.

A wide range of refractory foam compositions can be achieved using the basic procedures outlined above depending on the specific requirements of the final ceramic filter product. For example, if thermal shock resistance is of paramount importance, refractory compositions that result in low thermal expansion can be incorporated such as those containing lithium aluminosilicate, cordierite (a magnesium aluminosilicate) and/or aluminum titanate. In addition, if strength and toughness are more important, then such materials as mullite, zirconia-toughened ceramics and ceramic composites may be incorporated. If high thermal conductivity is important, then the use of silicon carbide or silicon nitride is recommended. If high refractoriness is important, pure alumina can be used. If long term durability is required in both thermal and mechanical shock conditions, then low expansion, strong and tough type systems will be utilized.

Another application of significant interest is low mass, porous refractory ceramic articles useful as kiln furniture.

Kiln furniture refers to the refractory shapes used to support ceramic ware during the firing process and includes shelves, contoured supports and spacers which are referred to in the industry as batts, setters (box, plate, yoke-ring) and the like. These refractory shapes must not only be able to withstand the high temperatures encountered in firing ceramics, but must also be strong enough to support the necessary load of the ceramic at firing temperature without deforming. Also of great importance, the kiln furniture must be reusable, a property demanding highly thermal shock resistant material.

Recent advances in high speed or fast-firing kilns in the ceramics industry have led to the possibility of improved economics in the manufacture of ceramic ware as a direct result of potential for fuel reduction during the firing cycle. In order to take maximum advantage of these potentially available process cost reductions, however, it is necessary to employ kiln furniture which is of low mass and yet which possesses extremely high thermal shock resistance in order to withstand the thermal cycling which characterizes the newer kiln designs and firing processes. Added to this is the need to provide kiln furniture of a variety of shapes and configurations as needs may dictate, as well as furniture having smooth surfaces suitable for supporting shapes to be fired into ceramics.

To date, a cost-effective kiln furniture article meeting all these requirements has not been realized. However, such goals are attainable using the compositions and processes of the present invention. In most respects, this application is quite similar to that earlier-described for a diesel filter trap, in terms of the refractory ceramic materials used in the foamable ceramic composition, the reduction of alkali metal in the unfired porous shape, the firing of the article, and the preferred provision of a thin porous ceramic membrane layer on selected surfaces (average pore size less than that of remaining body or other surfaces). The major difference is that the porosity of the porous main body or any porous ceramic membrane layer can, for kiln furniture, be of predominantly open-cell structure or predominantly closed-cell structure as may be desired for particular applications.

With particular regard to the use of a thin porous ceramic membrane layer to provide smooth surfaces on a ceramic body, such as above-described for kiln furniture, other applications include furnace linings, mold materials for conventional slip casting of ceramic ware, and other like uses. Smooth-surfaced furnace linings are advantageous in reflecting more heat than is absorbed, for example. Another advantageous use of the thin porous ceramic membrane layer is in foundry molds or cores where the body portion can be made from inexpensive materials and of a porosity which permits easy removal of core or mold material after the casting has been made, while a membrane layer can be provided using the more expensive inert materials required for the particular metal being cast, and in this way greatly reducing overall cost and processability as compared to a mold or core made entirely of the expensive inert materials. Particular advantage is found in applications, such as those above, where functional considerations require the provision of porous ceramic articles of complex shape. The use of moldable, foamable ceramic compositions is ideally suited for manufacture of articles of complex geometry, and the present invention, in providing means for arranging such compositions to produce smooth porous membrane layers on selected surfaces of the overall porous body portion, greatly expands the potential uses and functionality for such castable compositions.

As noted above, a particular application requiring a smooth porous ceramic membrane surface over a porous ceramic substrate material is in the area of mold materials for conventional slip casting of ceramic ware. Currently such molds are made with plaster materials that have been slightly dried so that they are extremely absorbent to the moisture in the ceramic slip. Typical ceramic slips used in the production of dinnerware, for example, contain 20 to 30 percent water. Once cast against a dried plaster mold, water is gradually "sucked" out of the slip and into the plaster. As the moisture is removed, the green strength of the slip increases until a strong, leather-like consistency is obtained. Once sufficient water is removed and strength obtained, the cast dinnerware can be removed from the plaster mold and further dried prior to firing to the required temperature. The plaster mold is then redried and reused. The number of times a particular plaster mold can be reused depends on the level of detail required in the slip cast part. With continued use, the plaster surface will deteriorate and the mold will have to be discarded.

Currently, the technology does not exist to allow the reuse of the spent plaster. As a result, huge waste piles of this plaster are collecting in landfills. Disposal is becoming a definite part of the production cost and alternatives to plaster molds are therefore being actively pursued. One method being employed more and more often is the pressure cast and/or the compression molding of simple shapes in permanent molds. Difficult shapes, i.e., those with complex configurations cannot be produced by these methods, however, and the traditional plaster molding process must therefore be used.

The ability to produce smooth porous ceramic membrane surface layers according to the present invention provides porous ceramic products which are an ideal substitute for the plaster molds described above. The strength and durability of such ceramic membrane porous molds is considerably higher than that of the plaster system. This aspect, coupled with the ability of using vacuum assisted dewatering of the ceramic slip material being cast against the mold, implies a considerable improvement in the cost of producing ceramic ware parts. In addition, the disposal of the ceramic mold is not as critical a problem as the plaster. If desired, the material can be ground up, sized and reused to make more molds.

The principles and compositional features of the present invention are also eminently suited to the production of lightweight building materials, such as building blocks for homes and other structures.

The art has long been aware of the theoretical desirability of replacing building materials such as concrete blocks as typically used in the U.S. or fired, extruded clay-type blocks typically used in Europe, with blocks based upon bound aggregate systems which afford more rapid curing and, hence, increased productivity in block manufacture. It is also a most desirable goal to produce concrete block replacements which are lightweight (i.e., low density) so as to facilitate handling and reduce materials costs as well as to improve insulating properties.

Despite knowledge of these goals, the art heretofore has been unsuccessful in attaining them to any practical degree. In order to compete with concrete or extruded clay-type blocks, these rapid-curing bound aggregates must be produceable at very low cost, something that is impossible for many systems relying upon rather expensive binding techniques unless the binder is used at extremely low levels. At such low binder levels, however, the solids content of the composition is so high as to make the composition extremely viscous and impractical for casting or injection molding. Although it may be possible to extrude such highly viscous slurries, that alone is not a solution to the problem where the original slurry is made up by mixing together separate aggregate-loaded slurries such as occurs in the present invention where an aggregate-loaded alkali metal aluminate slurry is mixed with an aggregate-loaded alkali metal aluminate slurry to form a composition in which the aluminate and silicate react to form the alkali metal aluminosilicate hydrogel binder. At high solids contents, the separate slurries are so viscous as to make intimate intermixing difficult if not impossible, leading to lack of homogeneity and lack of intermixing needed to achieve the proper hydrogel formation. Thus, even though the resultant composition (if formable at all) may be extrudable, it is not capable of producing the desired bound aggregate.

This difficulty in molding or mixing is greatly exacerbated when low density products are required e.g. 641 kg/m³ (40 lbs./ft.³) or less, most desirably 481 kg/m³ (30 lbs./ft.³) or less) since, in order to meet this goal, porous blocks are required and it is generally necessary to have extremely thin cell wall thicknesses in the open-or closed-cell pores, as the case may be (e.g., on the order of 200 »m or less, and 100 »m or less for very low density products). In turn, then, the aggregate materials (i.e., inexpensive inorganic ceramic materials such as clays and other natural materials) must have grain sizes predominantly less than 200 or 100 »m. Because such small grain size aggregates have extremely high surface areas, the viscosity of the composition increases even further, making casting or injection molding or even mixing essentially impossible. In such cases, solids contents must be drastically reduced in order to arrive at a processable composition, leading to blocks of inadequate strength and increased cost because of greater non-solids usage.

The present invention provides a unique solution to these problems in providing a foamable ceramic composition which can be heavily loaded with solids of predominantly fine grain size (i.e., 70% or greater solids content, 60% or greater aggregate content) and yet which, by reason of the viscosity-reducing and gel-strengthening agent (e.g., silica fume), can be made at a starting viscosity of 40,000 cps and less, and even below 30,000 cps (Brookfield viscosity).

According to the invention, then, a foamable ceramic composition is provided containing an aqueous admixture of alkali metal aluminate, alkali metal silicate, metal powder and surfactant, all as earlier described, and further containing suitable particulate aggregate material such as clays (which may be raw or partially or wholly calcined) or other like inorganic ceramic particulates. The particulate aggregate materials are preferably present in the composition in an amount of at least 60% by weight, and the total solids content of the composition is preferably at least 70% by weight. The particle size of the aggregate material is predominantly quite small, and generally at least 70% thereof is 200 »m or less. A preferred particle size distribution for a suitable partially calcined clay is as follows:

| % | »m Range |
|---|---|
| 8 - 10 | 100 - 200 |
| 8 - 10 | 75 - 100 |
| 15 - 20 | 50 - 75 |
| 40 - 50 | 1 - 50 |
| 5 - 10 | < 1 |

Using clays of this particle size distribution, which can be augmented up to 30% by weight with coarser aggregates, foamed alkali metal aluminosilicate hydrogel-bound aggregate blocks can be prepared having a bulk density of 641 kg/m³ (40 lbs./ft.³) or less. For making even lower density products, e.g. 481 kg/m³ (30 lbs./ft.³) or less, at least 70% of the aggregate material will have a particle size less than 100 »m. A preferred grain size distribution for preparing a low density block is as follows:

| % | »m Range |
|---|---|
| 8 - 10 | 100 - 150 |
| 8 - 10 | 75 - 100 |
| 15 - 20 | 50 - 75 |
| 40 - 50 | 1 - 50 |
| 5 - 10 | < 1 |

In all such cases, the viscosity-reducing and gel strengthening agent is utilized in an amount necessary to reduce the viscosity of the starting foamable composition (and the separate slurries used to prepare it) to 40,000 cps or less, preferably less than 30,000 cps, and most preferably between about 25,000 and 30,000 cps. At these viscosities, the composition is easily and readily mixed and then cast or injection molded or extruded to produce quick-curing blocks of substantial solids content at very low cost.

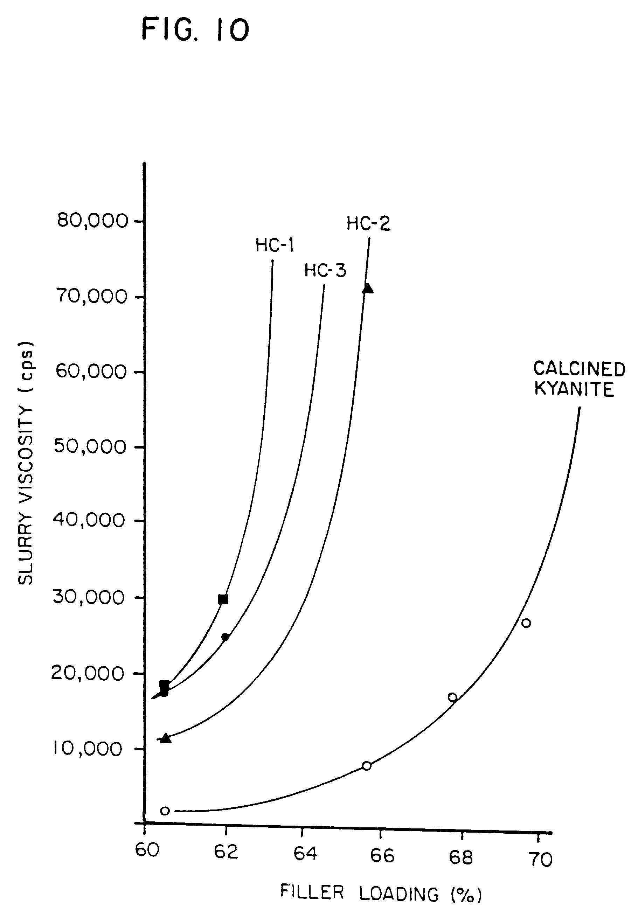

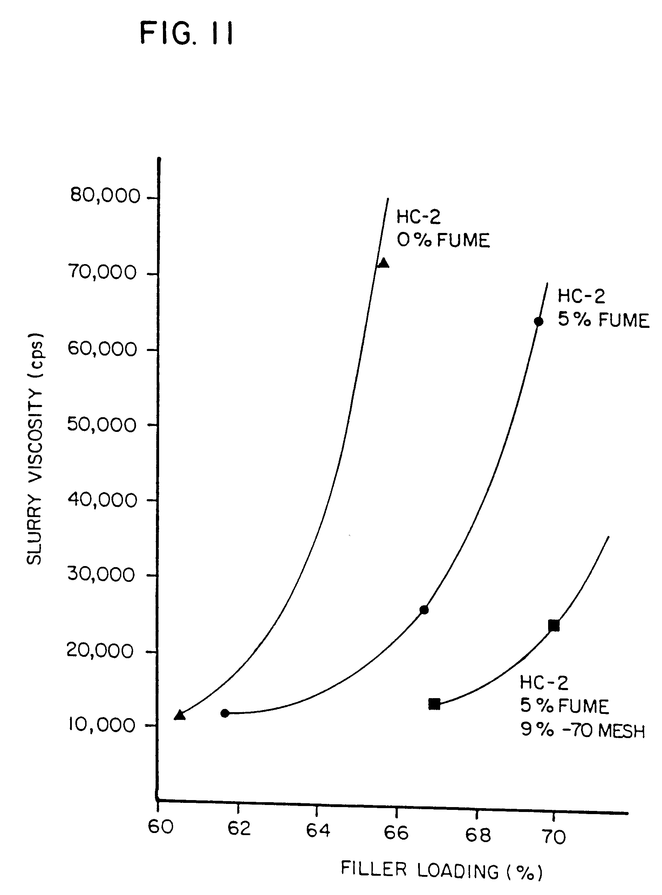

FIGS. 10 and 11 illustrate the effects of the viscosity-reducing and gel-strengthening agent (here, silica fume) on the viscosity of the foamable composition. In FIG. 10, three different partially calcined clays (HC-1, HC-2 and HC-3), each having a particle size distribution such that about 80% of the particles are 74 »m or less, were used as the aggregate portion of a foamable composition containing alkali metal aluminate, alkali metal silicate, metal powder, surfactant and water. As shown, viscosities below 30,000 cps could be achieved only at aggregate contents of 62 - 64% by weight, and higher contents of aggregate led to dramatic increases in viscosity, at which the composition was unprocessable (in contrast, it can be seen that standard calcined kyanite permits high loading levels at processable viscosities). In FIG. 11, the HC-2 aggregate-containing foamable composition was augmented with 5% silica fume in one case and with 5% silica fume and 9% coarse aggregates. As can be seen, the silica fume results in lower composition viscosity at equal HC-2 loading levels, to the point where viscosities of 30,000 cps or less can be achieved at up to 67% aggregate loading for HC-2 alone, and up to 70% aggregate loading for HC-2 and 9% coarse aggregate.

The foamable composition is either cast or injection-molded into a mold of desired (e.g., block-like) configuration such that, after the foaming/expansion, the self-supportable aluminosilicate hydrogel-bound aggregate is in the desired final dimensions, (e.g. 23 x 46 x 15 cm (9 x 18 x 6 inches). Alternatively, the composition can be extruded as a foam in a bulk shape and then cut to size. In each case, either in the mold or extrusion chamber as the case may be, the composition foams and expands by reason of reaction between the metal powder and alkali in the composition to produce hydrogen gas bubbles which, in conjunction with the surfactant, produces open-or closed-cell pores in the eventually bound product, while the aluminate and silicate components of the composition react to form the alkali metal aluminosilicate hydrogel binder which self-sets and binds the aggregates together in a porous, self-supporting shape.

The self-supporting hydrogel-bound aggregate shape is then dried to reduce the water content thereof. Depending upon the end use, the dried shapes may be employed as such (preferably with a first water treatment to remove any unbound alkali metal compounds which might, over time, migrate out to the block surface and form discolorations) or, as is typically the case, will be subjected to higher temperature conditions to effect sintering. Here again, if firing is in excess of 1000°C, it may be desirable to first remove unbound alkali metal compounds. Also if desired, the so-produced shapes (e.g., blocks) can be treated on all or particular surfaces to render the surface fluid or liquid impervious or to produce aesthetic smoothing effects.

Generally speaking, the so-produced blocks, in the initially dried state, will have a bulk density of less than 641 kg/m³ (40 lbs./ft.³), a compressive strength of 2 - 3 N/mm², a modulus of rupture of 1 - 2 N/mm², and a loss on ignition of 15% or less. When fired at 1000°C, the properties of the block improve to a bulk density of 449 - 513 kg/m³ (28 - 32 lbs./ft.³), compressive strength of 4 - 5 N/mm², modulus of rupture of 3 - 4 N/mm², and essentially no loss on ignition.

Preferred compositions of the foamed product include 28 - 34% hydrogel (28% - 34% solids, 66% - 72% water), 0.1% of surfactant (e.g., silicone glycol), 4 - 6% silica fume (0.25 »m), and the remainder particulate aggregate (e.g., for very low density products of cell wall thickness less than 100 »m, 60 - 65% of partially calcined clay having a predominant particle size of 74 »m or less, and for low density products of cell wall thickness less than 200 »m 55 - 60% of the above clay and 8 - 10% of coarser aggregates).

To further describe the present invention and its various aspects, a number of examples are presented in the following section illustrating a variety of potential compositions, processing techniques, applications and the like. In accumulating the data set forth in some of the examples, density, three-point modulus of rupture (MOR) and the coefficient of thermal expansion were measured by standard ASTM techniques. The pore structure (number of complete pore cells per linear cm or inch) was measured using both Scanning Electron Microscope (SEM) and stereographic light microscope photographs. The predominant micro-structural phases were determined using X-ray diffraction techniques as well as light microscope observation of polished and etched surfaces. The relative permeability, where applicable, was obtained using a turbine type air blower and recording the backpressure associated with the open celled structure as 2832 ℓ/min or 100 scfm (standard cubic feet per minute) of air was forced through. Thermal shock resistance was interpreted as the percent of initial MOR strength the ceramic foam retained after exposing the material to 100 thermal cycles between room temperature and 677°C (1250°F).

### EXAMPLE 1

A particularly effective ceramic foam filter for high temperature filtering applications was prepared using fused cordierite and calcined kyanite (mullite) refractories in the following manner. Initially, two slurries were prepared, one containing sodium silicate and the other, sodium aluminate. The slurries were prepared to a specific gravity of 2.1 g/cc at a viscosity of 25,000 cps at 21°C (70°F).

| Sodium Silicate Slurry | |
|---|---|
| sodium silicate grade 50 (44.1% solids) | 27.2% |
| additional process water | 5.4% |
| Dow surfactant 190 | 0.6% |
| silica fume (1/4 »m) | 1.6% |
| chopped fibers (1/8 and down) | 2.0% |
| fused cordierite (74 »m, -200 mesh) | 30.2% |
| calcined kyanite (74 »m, -200 mesh) | 32.7% |
| powdered aluminum metal (6-9 »m) | 0.3% |

| Sodium Aluminate Slurry | |
|---|---|
| sodium meta-aluminate solution (46% solids) | 25.9% |
| additional water | 5.7% |
| Dow surfactant 190 | 0.6% |
| silica fume (1/4 »m) | 1.5% |
| chopped fibers (1/8 and down) | 1.9% |
| fused cordierite (74 »m, -200 mesh) | 33.9% |
| calcined kyanite (74 »m, -200 mesh) | 31.0% |

Using a high shear type mixer or blender apparatus, equal weights (360 g) of the above slurries were combined and cast into a mold cavity with an 840 cc capacity to produce a 25.4 cm (10-inch) diameter, plate-like configuration, 16 mm (5/8 inches) thick. Since the slurries had a specific gravity of 2.1 g/cc, only 41% of the mold cavity was filled. In approximately 30 seconds after the two slurries were combined at 21°C (70°), the mix began to foam with a predominantly open-celled structure thereby filling the mold to yield a 0.86 g/cc wet density. Foaming stopped when the sodium aluminosilicate hydrogel binder phase "set" (approximately 3-4 minutes), freezing the expanded structure in place. The hydrogel bond developed sufficient strength in 8-10 minutes to allow the cast part to be demolded.

At this point the part contained 4.6% sodium oxide and 20.1% water at the above mentioned 0.86 g/cc density. In order to increase the refractoriness, the sodium oxide was then removed. This was accomplished by rinsing the part, in this case a 25.4 cm (10 inch) diameter plate, 16 mm (5/8 inches) thick, with 10 liters of purified water (preferably deionized water with a 50,000 ohm resistance or better). This rinse reduced the sodium oxide content to approximately 2%, the stoichiometric amount. To remove the remaining sodium, the part was then subjected to 30-40 liters of a 1% ammonium chloride solution whereby substantially all of the NH₄⁺ ions replaced the Na⁺ ions. An additional 5 liter water rinse was then performed to remove excess Cl⁻ ions after which the part was removed and allowed to drain and dry. An additional water rinse was then performed, after which the part was removed and allowed to drain and dry.

After the initial draining and air drying period, the part was heated in a vented oven to 204-316°C (400-600°F) to further dehydrate it. The length of time the part is in the oven varies with the particular type of oven (conventional or microwave) and the specific amount of water in the part as well as the porosity of the part. In this particular example, the 25.4 cm (10 inch) plate was heated 316°C to (600°F) in 6 hours. The warm part was removed from the oven and placed directly in a kiln supported on suitable kiln furniture. The part was then slowly heated to the required firing temperature of 1329°C (2425°F) in 10-12 hours. Once at temperature, the part was held for 2 hours to complete the sintering operation before being allowed to furnace cool.

Using the above formulation and process, the 10 inch ceramic foamed plate was characterized as follows:

| | |
|---|---|
| Density | 0.63 g/cc |
| Sodium content | less than 0.5% |
| Permeability (in a ten-inch plate) | 10.2 cm (4 inches) of water back-pressure at 100 |
| | scfm (2832 ℓ/min) |
| Predominant microstructure | cordierite, mullite |
| Coefficient of expansion | 1.5 x 10 (-6)°C⁻¹ to 700°C |
| | 3.2 x 10 (-6)°C⁻¹ to 1000°C |
| Modulus of rupture | 2.76-3.10 MPa (400-450 psi) |
| Modulus of rupture after 100 cycles from RT to 1250°F | 2.62-2.83 MPa (380-410 psi) |
| Pore structure | 12 pores per linear cm (30 pores per inch) |
| Apparent refractoriness | 1371°C (2500°F) |

A series of 25.4 cm (10 inch) reticulated foamed plates produced in this manner were placed in the exhaust stream from a 1982, 6.2 liter diesel engine to determine their effectiveness in filtering diesel particulates produced. The plates were arranged in a "stacked element" design. While the exact collection efficiency was not determined, a considerable amount of particulates were trapped within the cross-sectional area of the plates. Once filled with particulates, the plates were regenerated by placing them in a furnace and heating to the soot ignition temperature of 516°C (960°F) at which time the plate increased in temperature over that of the surrounding furnace environment indicating an exothermic reaction or burning of the particulates was taking place.

After regeneration, the plates were subjected to the same air flow permeability test to determine how much of the particulates or soot had been removed. Since the same 10.2 cm (4 inches) of water backpressure was reached, it was assumed that all particulates were burned.

The plates were put back in the exhaust stream to collect more particulates, but this time regeneration was performed using a diesel fuel burner/blower arrangement that was able to heat the ceramic plates in 3-4 minutes to 760°C (1400°F) thereby setting up a more thermal shock prone regeneration cycle that was more in tune with the expected service environment. Again, the regenerated plates experienced the same backpressure resistance as new plates. After a number of such regeneration cycles were performed, the plates were sectioned into MOR test bars and broken to determine if any loss in strength occurred as the result of such thermal cycling. No significant loss in strength was recorded.

### EXAMPLE 2

An essentially all cordierite type ceramic foam was produced in a similar manner to that in Example 1 with fused cordierite aggregate being the primary aggregate in each of the two reactive slurries, i.e., silicate and aluminate slurries, as follows:

| Silicate Slurry | |
|---|---|
| sodium silicate grade 50 | 27.1 |
| additional water | 6.0 |
| Dow 190 surfactant | 0.6 |
| silica fume | 3.6 |
| fused cordierite (74 »m, -200 mesh) | 60.8 |
| powdered aluminum metal (6-9 »m) | 0.1 |
| chopped fibers | 1.8 |

| Aluminate Slurry | |
|---|---|
| sodium meta aluminate solution | 24.7 |
| additional water | 6.9 |
| Dow 190 surfactant | 0.6 |
| silica fume | 3.2 |
| fused cordierite (74 »m -200 mesh) | 62.8 |
| chopped fibers | 1.8 |

The above slurries were blended together as in Example 1 with the same volume expansion due to the foaming action of the aluminum metal and sodium hydroxide portion of the binder. Rinsing, ion-exchange and drying were also performed as they were in Example 1. Firing however, was slightly lower with an upper holding temperature of 4782°C (2000°F).

The above formulation and procedures resulted in a reticulated ceramic foam with the following properties and characteristics:

| | |
|---|---|
| Density | 0.8 g/cc |
| Pores per linear cm | ∼12 (∼30 per cm) |
| Coefficient of thermal expansion | 1.8x10⁻⁶ °C⁻¹ |
| MOR | 570 kPa (827 psi) |
| MOR after 100 thermal cycles (to 677^{°}C 1250°F) | 536 kPa (777 psi) |
| Permeability (backpressure at 1382 ℓ/min, 100 scfm) | 102 cm (40 inches) H₂O |
| Principal microstructural constituent | Cordierite |

### EXAMPLE 3

The same mix and procedures of Example 2 above were prepared with the exception that the final firing temperature was reduced to 1800°F. The purpose in firing to a lower temperature was to increase the permeability (lowering the backpressure at the 100 scfm flow rate) of the final foamed ceramic. Using the lower firing temperature resulted in the following properties and characteristics:

| | |
|---|---|
| Density | .74 g/cc |
| Pores per linear cm | ∼12 (∼30 per in) |
| Coefficient of thermal expansion | 1.8x10⁻⁶ °C⁻¹ |
| MOR | 348 kPa (505 psi) |
| MOR after 100 thermal cycles (at 677°C, 1250°F) | 323 kPa (469 psi) |
| Permeability (backpressure at 2832 ℓ/min, 100 scfm) | 46 cm (18 inches) of water |
| Principal microstructural constituent | Cordierite |

### EXAMPLE 4

An essentially all calcined kyanite mix was also produced in a similar manner of mixing, leaching/rinsing, ion exchange and drying as that set forth in the above examples using the following slurry formulations:

| Silicate Slurry | |
|---|---|
| sodium silicate grade 50 | 26.0 |
| additional water | 5.8 |
| Dow 190 surfactant | 0.6 |
| silica fume | 3.3 |
| calcined kyanite (74 »m, -200 mesh) | 62.5 |
| powdered aluminum metal (6-9 »m) | 0.1 |
| chopped fibers | 1.7 |

| Aluminate Slurry | |
|---|---|
| sodium meta aluminate solution | 23.7 |
| additional water | 6.6 |
| Dow 190 surfactant | 0.6 |
| silica fume | 3.0 |
| calcined kyanite (74 »m -200 mesh) | 64.5 |
| chopped fibers | 1.6 |

Once properly dried, the calcined kyanite foamed plates were fired at 1427°C (2600°F) with the following properties and characteristics obtained:

| | |
|---|---|
| Density | 0.7 g/cc |
| Pores per linear cm | ∼12 (∼30 per cm) |
| Coefficient of thermal expansion | 4x10⁻⁶ °C⁻¹ |
| MOR | 3.11 MPa (451 psi) |
| MOR after 100 thermal cycles (to 677°C, 1250°F) | Failed after 6 cycles |
| Permeability (backpressure at 2832 ℓ/min, 100 scfm) | 30.5 cm (12 inches) of water |
| Principal microstructural constituent | Mullite |

### EXAMPLE 5

A ceramic foam composition containing dispersed zirconium oxide as a toughening aid was also prepared using the sodium aluminosilicate hydrogel system and a fused zirconia-mullite aggregate using the following starting slurry formulations:

| Silicate Slurry | |
|---|---|
| sodium silicate grade 50 | 21.9 |
| additional water | 4.9 |
| Dow 190 surfactant | 0.5 |
| silica fume | 2.8 |
| fused zirconia-mullite (74 »m -200 mesh) | 68.4 |
| powdered aluminum metal (6-9 »m) | 0.1 |
| chopped fibers | 1.4 |

| Aluminate Slurry | |
|---|---|
| sodium meta aluminate solution | 19.9 |
| additional water | 5.5 |
| Dow 190 surfactant | 0.5 |
| silica fume | 2.5 |
| fused zirconia-mullite kyanite (74 »m, -200 mesh) | 70.2 |
| chopped fibers | 1.4 |

Once properly dried, the foamed plates were fired at 1427°C (2600°F) with the following properties and characteristics obtained:

| | |
|---|---|
| Density | .84 g/cc |
| Pores per linear cm | ∼12 (∼30 per in) |
| Coefficient of thermal expansion | 5x10⁻⁶ °C⁻¹ |
| MOR | 3.28 MPa (476 psi) |
| MOR after 100 thermal cycles (to 677°C, 1250°F) | 2.72 MPa (395 psi) |
| Permeability (backpressure at 2832 ℓ/min, 100 scfm) | 63.5 cm (25 inches) of water |
| Principal microstructural constituent | mullite/zirconia |

### EXAMPLE 6

Another useful ceramic foamed system based on a cordierite-silicon carbide blend was also prepared using the sodium aluminosilicate hydrogel system and the same leaching/rinsing, ion exchange and drying procedures set forth in the above examples. The silicate and aluminate slurries used for this example consisted of the following materials:

| Silicate Slurry | |
|---|---|
| sodium silicate grade 50 | 27.4 |
| additional water | 6.2 |
| Dow 190 surfactant | .5 |
| silica fume | 2.8 |
| fused cordierite (74 »m -200 mesh) | 34.0 |
| silicon carbide (74 »m -200 mesh) | 27.4 |
| powdered aluminum metal (6-9 »m) | 0.1 |
| chopped fibers | 1.6 |

| Aluminate Slurry | |
|---|---|
| sodium meta aluminate solution | 23.6 |
| additional water | 6.8 |
| Dow 190 surfactant | 0.5 |
| silica fume | 2.4 |
| fused cordierite (74 »m -200 mesh) | 65.1 |
| chopped fibers | 1.5 |

Once properly dried, the foamed plates were fired at 1204°C (2200°F) with the following properties and characteristics obtained:

| | |
|---|---|
| Density | .75 g/cc |
| Pores per linear cm | ∼12 (∼30 per in) |
| Coefficient of thermal expansion | 2.5x10⁻⁶ °C⁻¹ |
| MOR | 2.62 MPa (380 psi) |
| MOR after 100 thermal cycles (to 677°C 1250°F) | 2.31 MPa (335 psi) |
| Permeability (backpressure at 2832 ℓ/min, 100 scfm) | 56 cm (22 inches) of water |
| Principal microstructural constituent | Cordierite, SiC |

### EXAMPLE 7

The examples so far have been concerned with the formation of porous ceramic components with high permeability for use in filtration and other similar applications requiring such permeability. One of the other major advantages of the present invention is the ability to change the pore morphology so that a mostly closed versus a mostly open cell structure results. Low density foams with mostly closed cell structures make, e.g., ideal insulation components with their refractoriness limited primarily by the refractory constituents of the final foamed product. In order to create such a ceramic foam, the same sodium aluminosilicate hydrogel bonding system was used but with a different type of surfactant that stabilizes a closed versus open cell structure. Since some permeability still occurs in the green or hydrogel state, the same leaching/rinsing, ion exchange and drying procedures used in the preceding examples was used to remove the sodium and make the final foamed product more refractory. The silicate and aluminate slurries used for one such example involving a calcined kyanite refractory consisted of the following compositions:

| Silicate Slurry | |
|---|---|
| sodium silicate grade 50 | 26.0 |
| additional water | 5.8 |
| Dow 193 surfactant | 0.6 |
| silica fume | 3.3 |
| calcined kyanite (74 »m -200 mesh) | 64.2 |
| powdered aluminum metal (6-9 »m) | 0.1 |

| Aluminate Slurry | |
|---|---|
| sodium meta aluminate solution | 23.7 |
| additional water | 6.6 |
| Dow 193 surfactant | .5 |
| silica fume | 3.0 |
| calcined kyanite (74 »m -200 mesh) | 66.2 |

Once properly dried, the calcined kyanite foamed plates were fired at 1427°C (2600°F) with the following properties and characteristics obtained:

| | |
|---|---|
| Density | .8 g/cc |
| Pores per linear cm | ∼14 (∼35 per in.) |
| Coefficient of thermal expansion | 4x10⁻⁶ °C⁻¹ |
| MOR | 4.48 MPa (650 psi) |
| MOR after 100 thermal cycles (to 677°C, 1250°F) | N/A |
| Permeability (backpressure at 2832 ℓ/min, 100 scfm) | High |
| Principal microstructural constituent | Mullite |

### EXAMPLE 8

To produce kiln furniture, two slurries were prepared, one containing sodium silicate and the other sodium aluminate. The slurries were prepared to a specific gravity of 2.1 g/cc at a viscosity of 25,000 cps at 21°C (70°F).

| Sodium Silicate Slurry | |
|---|---|
| sodium silicate grade 50 (44.1% solids) | 27.2% |
| additional process water | 5.4% |
| Dow surfactant 190 | 0.6% |
| silica fume (1/4 »m) | 1.6% |
| chopped fibers (1/8 and down) | 2.0% |
| fused cordierite (74 »m -200 mesh) | 30.2% |
| calcined kyanite (74 »m -200 mesh) | 32.7% |
| powdered aluminum metal (6-9 »m) | 0.3% |

| Sodium Aluminate Slurry | |
|---|---|
| sodium meta-aluminate solution (46% solids) | 25.9% |
| additional water | 5.7% |
| Dow surfactant 190 | 0.6% |
| silica fume (1/4 »m) | 1.5% |
| chopped fibers (1/8 and down) | 1.9% |
| fused cordierite (74 »m -200 mesh) | 33.9% |
| calcined kyanite (74 »m -200 mesh) | 31.0% |

Equal weights (360g) of the slurries were combined and cast into a mold cavity having an 840 cc capacity (since the slurries had a specific gravity of 2.1 g/cc, only 41% of the mold cavity was filled). The mold was in the form suitable for preparing a 25.4 cm (10-inch) diameter plate, 5/8-inches thick. One side of the mold surface was coated with a release agent containing 17.5% polyethylene glycol 3350, 12.5% polyvinyl alcohol solution, 36.5% glycerine and 33.5% water. Approximately 30 seconds after the ceramic composition was cast into the mold, the mix began to foam to an open-cell porous structure having a wet density of 0.86 g/cc. Foaming stopped when the sodium aluminosilicate hydrogel binder phase set (approximately 3 to 4 minutes), freezing the expanded structure in place. Adjacent the release agent, the ceramic composition gelled more rapidly, thereby preventing growth of any hydrogen gas bubbles formed near this surface. After 8 to 10 minutes in the mold, the hydrogel developed sufficient strength to be demolded, and the supportable cast shape displayed on excellent smooth skin where it was in contact with the release agent composition.

At this point the part contained 4.6% sodium oxide and 20.1% water at the above mentioned 0.86 g/cc density. In order to increase the refractoriness, the sodium oxide was then removed. This was accomplished by rinsing the part with 10 liters of purified water (deionized water with a 50,000 ohm resistance or better). This rinse reduced the sodium oxide content to approximately 2%, the stoichiometric amount. To remove the remaining sodium, the part was then subjected to 30-40 liters of a 1% ammonium chloride solution whereby all of the NH₄⁺ ions replaced the Na⁺ ions. An additional 5 liter water rinse was then performed to remove excess Cl⁻ ions after which the part was removed and allowed to drain and dry.

After the initial draining and air drying period, the part was heated to 316°C (600°F) in 6 hours. The warm part was removed from the oven and placed directly in a kiln. The part was then slowly heated to the required firing temperature of 1329°C (2425°F) in 10-12 hours. Once at temperature, the part was held for 2 hours to complete the sintering operation before being allowed to furnace cool.

The ceramic article made in this manner had a predominant microstructure of cordierite/mullite, an apparent refractoriness of about 1371°C (2500°F), a coefficient of thermal expansion of about 1.5x10(-6)°C⁻¹ at 700°C and 3.2x10(-6)°C⁻¹ at 1000°C., and a room temperature modulus of rupture of about 2.76-3.10 MPa (400 -450 psi). After exposure to 100 cycles of room temperature to 1250°C, no significant loss of strength was recorded. The apparent refractoriness of the article was about 1371°C (2500°F), and its density was about 0.6 g/cc.

The article so made is excellently suited for use as kiln furniture by reason of its low mass, porosity, refractoriness, resistance to thermal shock, and smooth-skinned surface.

### EXAMPLE 9

Utilizing the composition and process set forth in Example 8, but using instead a release agent consisting of 50% water and 50% glycerine, a porous refractory ceramic kiln furniture plate of low density was produced having a smooth skin on one surface thereof by reason of rapid gelation of the aluminosilicate hydrogel in contact with the release agent prior to development of any large bubbles.

### EXAMPLE 10

Utilizing the composition and process set forth in Example 8, but coating one of the mold surfaces with a thin layer of woven mullite fibered paper (instead of using the release agent composition of Example 1), the part removed from the mold was found to have the woven paper significantly attached to its surface such that no separation occurred during subsequent sodium removal processing. Upon firing, there was produced a low density porous ceramic refractory kiln furniture article having a smooth skin on one of its surfaces.

### EXAMPLE 11

The same composition and process set forth in Example 8 was employed with the exception that a silicone release agent modified with a silicone defoaming surfactant was sprayed on one of the mold surfaces, and that mold surface was locally heated to 60-66°C (140 - 150°F), while the other mold surface was kept at room temperature. As a consequence of accelerated gelation of the hydrogel in contact with the heated surface insufficient time was available for the foam cells to grow to any appreciable size before setting occurred. The result was a smooth surface on the kiln furniture article after firing.

### EXAMPLE 12

A particularly effective ceramic foam filter for the high temperature filtering of diesel particulates includes the casting of a sodium aluminosilicate hydrogel bonded system of Example 1 to create a reticulated porous plate in which one side of the mold surface was coated with a release agent based on polyethylene glycol 3350, polyvinyl alcohol, glycerine and water of the following composition:

| | |
|---|---|
| polyethylene glycol 3350 | 17.5% |
| polyvinyl alcohol solution | 12.5% |
| glycerine | 36.5% |
| water | 33.5% |

Once the silicate and aluminate containing slurries were combined and cast into the mold, the mix adjacent to the above release agent rapidly gelled, thereby preventing the growth of any hydrogen gas bubble that may have formed near the mold surface as the result of the reaction of the aluminum metal powder and the sodium hydroxide in the mix. After demolding, the cast part displayed an excellent "skin" or smooth membrane surface that upon further processing to remove sodium and water followed by firing at a suitable temperature to form ceramic bonds, remained porous even though by naked eye the surface appears dense.

A series of 25,4 cm (10 inch) foamed plates produced in this manner with such excellent ceramic membrane surfaces on one side were fashioned into a stacked element filtering arrangement. The efficiency of the diesel particulate collection was measured using a suitable device at a major diesel engine manufacturer's test facility and found to be in the 65-70% efficient range. Such efficiencies would make the 1991 and 1994 diesel engine prototypes now being designed meet the EPA emission standards.

## Claims

1. A foamable ceramic composition which can be molded to a desired geometric configuration and which is self-settable in said configuration to achieve a self-supporting shaped structure of defined porosity, said composition comprising an aqueous admixture of effective amounts of an alkali metal silicate, an alkali metal aluminate, refractory ceramic materials and metal powder, whereby said alkali metal silicate and said alkali metal aluminate react to form a self-setting alkali metal aluminosilicate hydrogel which serves as a binder to set the composition in the molded shape, and wherein said metal powder is present in an amount effective to react with alkaline materials in said composition so as to produce, as a by-product of such reaction, hydrogen gas which, in conjunction with said surfactant, develops in said composition a significant degree of porosity prior to the setting of said hydrogel, characterised in that the composition includes a surfactant and a viscosity-modifying and gel strengthening agent in the form of finely-divided spherical particles.

2. A foamable ceramic composition according to claim 1 wherein said viscosity-modifying and gel-strengthening agent comprises a fumed metal oxide.

3. A foamable ceramic composition according to claim 2 wherein said viscosity-modifying and gel strengthening agent is selected from silica fume, fly ash, manganese oxide fume, ferro-silicon fume, and mixtures thereof.

4. A foamable ceramic composition according to claim 3 wherein said gel strengthening agent consists of silica fume, and said metal powder is aluminum metal powder.

5. A process for preparing porous ceramic articles, comprising the steps of:
(a) providing a foamable ceramic composition comprised of an aqueous admixture of effective amounts of an alkali metal silicate, an alkali metal aluminate, refractory ceramic materials, viscosity-modifying and gel strengthening agent in the form of finely divided spherical particles, surfactant and metal powder;
(b) forming said composition into a desired configuration utilizing a mold or extrusion chamber;
(c) permitting said casting composition to reside in said mold or said chamber for a predetermined period of time during which components of said composition react to form an aluminosilicate hydrogel which binds all components of said composition in a supportable shape conforming to said mold or chamber and during which porosity is developed in said supportable shape by virtue of evolution of hydrogen in said composition as a result of reaction between said metal powder and alkaline materials in said composition;
(d) removing said porous supportable shape from said mold or said chamber; and
(e) drying said supportable shape.

6. A process according to claim 5 further comprising the step of treating the porous supportable shape to eliminate therein and therefrom substantially all alkali metal and then firing said porous supportable shape.

7. A process according to claim 6 wherein the step of eliminating the alkali metal content comprises first contacting said porous supportable shape with water to remove therefrom leachable alkali compounds, and thereafter contacting said porous ceramic shape with a dilute aqueous solution of an ammonium salt selected from ammonium acetate, ammonium bicarbonate, ammonium carbonate, ammonium chloride, ammonium hydroxide, ammonium sulfate, and mixtures thereof, to effect substantially complete exchange of ammonium ion for remaining alkali metal ion in said porous ceramic shape.

8. A process according to any one of claims 5 to 7 wherein said porous supportable shape, either in its dried or fired condition, is provided on one or more surfaces thereof with a thin porous ceramic membrane layer, the pores of which have an average pore size less than that of the pores throughout the remainder of the porous supportable shape.

9. A process according to any one of claims 5 to 8 wherein said ceramic refractory materials comprise particulate aggregate material, said foamable composition having a total solids content of at least 70% by weight and a total aggregate content of at least 60% by weight, said aggregate material having a particle size distribution such that more than 70% thereof is of a particle size of 200 »m or less, and wherein said viscosity-modifying and gel-strengthening agent comprises a fumed metal oxide in an amount effective to reduce the starting viscosity of said foamable composition to less than 40 Pas.

10. A process according to claim 5 which includes the additional step of:
(f) sintering or firing the dried supportable shape.

11. An element for filtering solid particulates from a diesel exhaust gas, comprising a shaped porous refractory ceramic body having a predominantly open pore structure and having an inlet and outlet surface, and wherein at least one of said inlet and outlet surfaces contains an integral thin porous ceramic membrane layer of open cell porosity, the pores of which have an average diameter smaller than that of the pores at the inlet surface and the pores throughout the interior of the body, and wherein said porous refractory ceramic body is made by shaping, drying and firing a porous aluminosilicate hydrogel-bonded ceramic composition according to any one of claims 1 to 4.

12. Kiln furniture for supporting ceramic ware during the firing thereof, comprised of a porous, low-density, refractory ceramic body having on one or more surfaces thereof an integral smooth skin in the form of a thin porous ceramic membrane layer, the pores of which are of an average size smaller than those of said body portion and remaining surfaces, said ceramic body being made by a process according to claim 8 as dependent on claim 6 or claim 7.

13. A process for producing porous ceramic articles comprising providing a foamable, moldable ceramic composition according to any one of claims 1 to 4, providing on selected mold surfaces an agent for bringing about formation of a porous ceramic membrane layer on those surfaces of said porous shape in contact with said mold surfaces; casting or injecting said foamable, ceramic composition into said mold and permitting it to remain in said mold until such time as said self-supportable porous shape is formed; removing said self-supportable shape. and firing said self-supportable porous shape to produce a porous ceramic article having on said selected surfaces a thin smooth, porous ceramic membrane layer, the pores of which have an average diameter less than that of the pores throughout the remainder of said article.

## Patentansprüche

1. Schäumbare keramische Zusammensetzung, die in eine gewünschte geometrische Konfiguration gebracht werden kann und die sich selbst in dieser Konfiguration setzen kann, um eine sich selbst tragende, geformte Struktur definierter Porösität zu erzielen, wobei diese Zusammenstzung eine wässrige Mischung nennenswerter Mengen eines Alkalimetallsilikats, eines Alkalimetallaluminats, refraktierender Keramikmaterialien und von Metallpulver enthält, wobei dieses Alkalimetallsilikat und das Alkalimetallaluminat so reagieren, daß sich ein selbst-setzendes hydrogeles Alkalimetallaluminiumsilikat biildet, das als Bindemittel dient, um die Zusammensetzung in der geformten Form zu setzen, und wobei dieses Metallpulver in einer derartigen Menge vorliegt, um mit den alkalischen Materialien in der Zusammensetzung zu reagieren, um als Nebenprodukt einer derartigen Reaktion Hydrogen-Gas zu erzeugen. das, in Verbindung mit dem Surfactant in dieser Zusammensetzung eine bestimmte Porösität herbeiführt, bevor sich das Hydrogel setzt,
dadurch gekennzeichnet, daß die Zusammmensetzung einen Surfactant und einen viskositätsverändernden und gelverstärkenden Aktor in Form von fein verteilten sphärischen Partikeln enthält.

2. Schäumbare keramische Zusammensetzung nach Anspruch 1, wobei dieser viskositätsverändernde und gelverstärkende Aktor ein gebranntes Metalloxid enthält.

3. Schäumbare keramische Zusammensetzung nach Anspruch 2, wobei dieser viskositätsverändernde und gelverstärkende Aktor ausgewählt ist aus Silikatrauch, Flugasche, Manganoxidrauch, Eisen-Silikat-Rauch oder einer Mischung davon.

4. Schäumbare keramische Zusammensetzung nach Anspruch 3, wobei dieser viskositätsverändernde und gelverstärkende Aktor aus Silikatrauch besteht und das Metallpulver ein Aluminiummetallpulver ist.

5. Verfahren zur Herstellung poröser keramischer Artikel, das die Schritte umfaßt:
a) Bereitstellen einer formbaren keramischen Zusammensetzung, bestehend aus einer wässrigen Mischung nennenswerter Mengen eines Alkalimetallsilikats, eines Alkalimetallaluminats, refraktierender Keramikmaterialien, eines viskositätsverändernden und gelverstärkenden Aktors in Form fein verteilter spärischer Partikel, eines Surfactants und eines Metallpulvers,
b) Formen dieser Zusammensetzung in eine gewünschte Konfiguration unter Verwendung einer Form- oder Extrudierkammmer,
c) Zulassen des Verbleibens dieser geformten Zusammensetzung in der Form oder dieser Kammer für eine vorgegebene Zeitspanne, während der die Komponenten dieser Zusammensetzung reagieren und ein Aluminiumsilikat-Hydrogel bilden, das alle Komponenten dieser Zusammensetzung in eine tragende Form bindet, die der der Form oder Kammer entspricht, und während der in der tragenden Form eine Porösität ausgebildet wird durch das Entstehen von Hydrogen in dieser Zusammensetzung als Folge der Reaktion zwischen diesem Metallpulver und den alkalischen Materialien in dieser Zusammmensetzung,
d) Entfernen dieser porösen tragfähigen Form aus der Form oder Kammer, und
e) Trocknen der tragfähigen Form.

6. Verfahren nach Anspruch 5, das außerdem den Schritt der Behandlung der porösen tragfähigen Form beinhaltet, um alle darin und daran befindlichen Alkalimetalle zu entfernen und sie danach zu brennen.

7. Verfahren nach Anspruch 6, wobei der Schritt des Entfernens der Alkalimetalle zuerst das in Kontakt bringen der porösen tragfähigen Form mit Wasser umfaßt, um alle daran haftenden löslichen Alkalikomponeneten zu entfernen, und danach das in Kontakt bringen der porösen tragfähigen Form mit einer verdünnten wässrigen Lösung von Ammoniumsalz, ausgewählt aus Ammoniumacetat, Ammoniumbikarbonat, Ammoniumkarbonat, Ammoniumchlorid, Ammoniumhydroxid, Ammoniumsulfat und einer Mischung davon, um einen im wesentlichen vollständigen Austausch vom Ammoniumionen mit den verbleibenden Alkalimetallionen in dieser porösen keramischen Form herbeizuführen.

8. Verfahren nach einem der Ansprüche 5 - 7, wobei diese poröse, tragende Form, entweder in ihrem trockenen oder gebrannten Zustand, auf einer oder mehrerer ihrer Oberflächen mit einer dünnen keramischen porösen Membranschicht versehen wird, deren Poren im Durchschnitt eine geringere Größe aufweisen als die Poren auf dem verbleibenden Oberflächenbereich der porösen tragenden Form.

9. Verfahren nach einem der Ansprüche 5 - 8, wobei diese keramischen refraktierenden Materialien insbesondere Aggregatmaterial umfassen, diese schäumbare Zusasmmensetzung eine kompletten Feststoffgehalt von mindestens 70 Gewichtsprozent und einen kompletten Aggregatsgehalt von mindestens 60 Gewichtsprozent aufweist, wobei dieses Aggragatmaterial eine derartige Größenverteilung der Partiikel aufweist, daß wenigstens 70% davon eine Partikelgröße von 200 mikrometer oder eine kleinere Partikelgröße aufweisen, und wobei dieser viskositätsverändernde und gelverstärkende Aktor ein gebranntes Metalloxid in einer Menge aufweist, die die Anfangsviskosität der formbaren Zusammensetzung auf weniger als 40 Pas verringern kann.

10. Verfahren nach Anspruch 5, das den zusätzlichen Schritt beinhaltet von
f) Sintern oder Brennen der getrockneten tragenden Form.

11. Element zum Filtern fester Bestandteile aus Dieselabgasen, das einen pörosen geformten refraktierenden keramischen Körper mit einer dominierenden offen Porenstruktur aufweist und eine Eintritts- und eine Austrittsfläche aufweist, und wobei wenigstens eine der Eintritts- und Austrittsoberflächen ein integrierte dünne poröse keramische Membranschicht mit offener Zellporösität aufweist, deren Poren einen geringeren durchschnittlichen Durchmmesser als die Poren der Eintrittsfläche und die Poren im Inneren des Körpers aufweisen, und wobei dieser pörose refraktierende Keramikkörper durch das Formen, Trocknen und Brennen einer porösen hydrogelgebundenen keramischen Zusammensetzung nach einem der Ansprüche 1 - 4 hergestellt ist.

12. Kiln-Möbel zum Halten des keramischen Materials während dessen Brennen, zusammengesetzt aus einemm porösen refraktierenden keramischen Körper geringer Dichte, der auf einer oder mehreren Oberflächen eine integrale glatte Schicht in Form einer dünnen porösen keramischen Membranschicht trägt, deren Poren einen im Durchschnitt geringeren Durchmesser aufweisen als die Poren dieses Körpers und der verbleibenden Oberflächen, wobei dieser keramische Körper nach einen Verfahren nach Anspruch 8 in Abhängigkeit von Anspruch 6 oder 7 hergestellt ist.

13. Verfahren zur Herstellung von porösen keramischen Artikeln, das den Schritt des Bereitstellens einer schäumbaren, formbaren keramischen Zusammensetzung nach einem der Ansprüche 1 - 4 umfaßt, das Bereitstellen eines Aktors auf ausgewählten Formoberflächen zur Erzeugung einer porösen keramischen Memmbranschicht auf den Oberflächen dieser porösen Form, die in Kontakt mit den Formoberflächen sind, Einformen oder Einspritzen dieser keramischen Zusammensetzung in diese Form und Erlauben des Verbleibens davon in dieser Form während einer Zeit, in der die selbsttragende Form gebbildet wird, Entfernen dieser selbsttragenden Form und Brennen dieser selbstragenden Form, um einen porösen keramischen Artikel zu erzeugen, der auf diesen ausgewähletn Oberflächen eine dünne glatte poröse keramische Membranschicht trägt, deren Poren im Durchschnitt einen geringeren Durchmesser aufweisen als die Poren im Restbestandteil des Artikels.

## Revendications

1. Composition céramique expansible, pouvant être moulée pour prendre une configuration géométrique voulue, et qui est auto-durcissable dans cette configuration, pour réaliser une structure façonnée auto-portante ayant une porosité parfaitement définie, cette composition comprenant un mélange aqueux de quantités efficaces d'un silicate de métal alcalin, d'un aluminate de métal alcalin, de matériaux céramiques réfractaires et d'une poudre métallique, le silicate d'un métal alcalin et l'aluminate d'un métal alcalin réagissant pour former un hydrogel d'aluminosilicate d'un métal alcalin, autodurcissable, qui sert de liant pour provoquer le durcissement de la composition et lui faire prendre la forme moulée, et où la poudre métallique est présente en une quantité suffisante pour, réagir avec les matériaux alcalins se trouvant dans la composition dans le but de produire, sous forme d'un sous-produit de la réaction, de l'hydrogène gazeux qui, conjointement au tensioactif, va développer dans la composition un degré élevé de porosité avant durcissement de l'hydrogel, caractérisée en ce que la composition comprend un tensioactif et un agent modifiant la viscosité et renforçant le gel, sous forme de particules sphériques finement divisées.

2. Composition céramique expansible selon la revendication 1, dans laquelle l'agent modifiant la viscosité et renforçant le gel comprend un oxyde métallique fumé.

3. Composition céramique expansible selon la revendication 2, dans laquelle l'agent modifiant la viscosité et renforçant le gel est choisi parmi la silice fumée, les cendres volantes, l'oxyde de manganèse fumé, le ferro-silicium fumé et leurs mélanges.

4. Composition céramique expansible selon la revendication 3, dans laquelle l'agent de renforcement du gel est constitué de silice fumée, et la poudre métallique est une poudre d'aluminium métallique.

5. Procédé pour préparer des articles céramiques poreux, qui comprend les étapes consistant :
(a) à partir d'une composition céramique expansible constituée d'un mélange aqueux de quantités efficaces d'un silicate de métal alcalin, d'un aluminate de métal alcalin, de matériaux céramiques réfractaires, d'un agent modifiant la viscosité et renforçant le gel, sous forme de particules sphériques finement divisées, d'un tensio-actif et d'une poudre métallique ;
(b) à transformer cette composition en la configuration voulue, en utilisant un moule ou une chambre d'extrusion ;
(c) à permettre à la composition de coulée de résider dans le moule ou dans la chambre pendant un laps de temps prédéterminé, pendant lequel les constituants de la composition réagissent pour former un hydrogel d'aluminosilicate, qui lie tous les constituants de la composition pour obtenir une forme auto-portante, qui épouse le moule ou la chambre, et pendant lequel il se développe une porosité dans cette forme auto-portante, du fait du dégagement de l'hydrogène dans la composition en conséquence d'une réaction entre la poudre métallique et les substances alcalines se trouvant dans la composition ;
(d) à enlever du moule ou de la chambre la forme poreuse auto-portante ; et
(e) à sécher la forme auto-portante.

6. Procédé selon la revendication 5, qui comprend en outre l'étape consistant à traiter la forme poreuse auto-portante, pour y éliminer et en éliminer essentiellement la totalité du métal alcalin, puis à cuire la forme poreuse auto-portante.

7. Procédé selon la revendication 6, dans lequel l'étape d'élimination du métal alcalin contenu consiste d'abord à mettre en contact la forme poreuse auto-portante avec de l'eau pour en éliminer les composés alcalins lixiviables, puis à mettre en contact la forme céramique poreuse avec une solution aqueuse diluée d'un sel d'ammonium choisi parmi l'acétate d'ammonium, le bicarbonate d'ammonium, le carbonate d'ammonium, le chlorure d'ammonium, l'hydroxyde d'ammonium, le sulfate d'ammonium et leurs mélanges, pour remplacer d'une manière essentiellement complète par un ion ammonium l'ion résiduel d'un métal alcalin se trouvant dans la forme céramique poreuse.

8. Procédé selon l'une quelconque des revendications 5 à 7, dans lequel la forme poreuse auto-portante, sous se forme séchée ou cuite, possède, sur une ou plusieurs de ses surfaces, une couche membranaire céramique poreuse mince, dont les pores ont un diamètre moyen inférieur à celui des pores se trouvant dans la totalité du reste de la forme poreuse auto-portante.

9. Procédé selon l'une quelconque des revendications 5 à 8, dans lequel les matériaux réfractaires céramiques comprennent un matériau d'agrégat particulaire, la composition expansible ayant une teneur totale en extrait sec d'au moins 70 % en poids et une teneur total en agrégats d'au moins 60 % en poids, le matériau d'agrégats ayant une répartition granulométrique telle que plus de 70 % de ce matériau ont une granulométrie de 200 »m ou moins, et où l'agent modifiant la viscosité et renforçant le gel comprend un oxyde métallique fumé en une quantité suffisante pour réduire à moins de 40 Pa.s la viscosité initiale de la composition expansible.

10. Procédé selon la revendication 5, qui comprend l'étape supplémentaire consistant :
(f) à fritter ou à cuire la forme séchée autoportante.

11. Elément pour filtrer les particules solides provenant du gaz d'échappement d'un moteur diesel, qui comprend un corps céramique réfractaire poreux façonné, ayant une structure essentiellement à alvéoles ouverts, et ayant une surface d'entrée et une surface de sortie, et dans lequel au moins l'une des surfaces, d'entrée ou de sortie, contient une couche membranaire céramique poreuse mince et solidaire ayant une porosité à alvéoles ouverts, dont les pores ont un diamètre moyen inférieur à celui des pores de la surface d'entrée et des pores se trouvant dans le volume intérieur du corps, et où le corps céramique réfractaire poreux est constitué par façonnage, séchage et cuisson d'une composition céramique poreuse liée à un hydrogel d'aluminosilicate selon l'une quelconque des revendications 1 à 4.

12. Accessoire d'enfournement pour soutenir un article céramique pendant sa cuisson, constitué d'un corps céramique réfractaire poreux à basse densité, ayant sur une ou plusieurs de ses surfaces une peau lisse et solidaire, sous forme d'une couche membranaire céramique poreuse mince, dont les pores ont un diamètre moyen inférieur à celui des pores du corps et des surfaces restantes ci-dessus, le corps céramique étant obtenu par un procédé selon la revendication 8, tel que dépendant de la revendication 6 ou 7.

13. Procédé pour fabriquer des articles céramiques poreux, qui consiste à partir d'une composition céramique moulable et expansible selon l'une quelconque des revendications 1 à 4, à placer sur certaines surfaces du moule un agent pour provoquer la formation d'une couche membranaire céramique poreuse sur ces surfaces de la forme poreuse en contact avec les surfaces du moule ; à couler ou à injecter la composition céramique expansible dans le moule et à lui permettre de rester dans le moule jusqu'à formation de la forme poreuse auto-portante ; à enlever la forme auto-portante, et à cuire la forme poreuse auto-portante pour produire un article céramique poreux ayant sur les surfaces sélectionnées ci-dessus une couche membranaire céramique poreuse lisse et mince, dont les pores ont un diamètre moyen inférieur à celui des pores se trouvant dans la masse résiduelle de l'article.
